# EUROPEAN PATENT SPECIFICATION

(11) **EP 2 350 191 B1**
(45) Date of publication and mention of the grant of the patent: **11.09.2013**
(21) Application number: 09764366.2
(22) Date of filing: 16.11.2009
(51) Int. Cl.: C08G 18/36, C08G 18/42, C08G 18/48

(54) **MODIFIED NATURAL OILS AND PRODUCTS MADE THEREFROM**
MODIFIZIERTE NATÜRLICHE ÖLE UND DARAUS HERGESTELLTE PRODUKTE
HUILES NATURELLES MODIFIÉES ET PRODUITS FABRIQUÉS À PARTIR DE CELLES-CI

(30) Priority: 14.11.2008 US 114645 P
(43) Date of publication of application: 03.08.2011
(73) Proprietor: Dow Global Technologies LLC, Midland, MI 48674 (US); ROHM AND HAAS COMPANY, Philadelphia Pennsylvania 19105 (US)
(72) Inventor: CASATI, Francois, CH-8808 Pfaffikon (CH); SHUTOV, Pavel, NL-4532LH Terneuzen (NL); VAN DER WAL, Hanno, NL-4542 BP Hoek (NL); COOKSON, Paul, CH-8833 Samstagern (CH); MORLEY, Timothy, CH-8810 Horgen (CH); WILMOT, Nathan, Missouri City TX 77459 (US); ZALAMEA, Luis, CH-8805 Richterswil/ZH (CH); WU, Zhizhong, Pearland TX 77584 (US); ZUPANCIC, Joseph, Glen Ellyn IL 60137-3217 (US); VIETTI, David, Cary IL 60013 (US)
(74) Representative: Raynor, John
(86) International application number: PCT/US2009/064597
(87) International publication number: WO 2010/057100

(56) References cited:
- TARIK EREN, SELIM H. KÜSEFOGLU, RICHARD WOOL: "Polymerization of Maleic Anhydride-Modified Plant Oils with Polyols." JOURNAL OF APPLIED POLYMER SCIENCE, vol. 90, 22 December 2002 (2002-12-22), pages 197-202, XP002582441

## Description

### Field of the Invention

Embodiments of the present invention generally relate to modified natural oils or fats and products based on such renewable resources.

### Description of the Related Art

Polyether polyols based on the polymerization of alkylene oxides, polyester polyols, or combinations thereof, are together with isocyanates the major components of a polyurethane system. One class of polyols are conventional petroleum-based polyols, and another class are those polyols made from vegetable oils or other renewable feedstocks. Polyols based on renewable feedstocks may be sold and marketed as a component of polyol blends which often also may include conventional petroleum-based polyols. A majority of renewable feedstock polyols are based on epoxidation or hydroformylation of unsaturated natural oils with a subsequent transesterification or alkoxylation or even both. Document "Polymerization of Maleic Anhydride-Modified Plant Oils with Polyols" (TARIK EREN, SELIM H. KOSEFOGLU, RICHARD WOOL, JOURNAL OF APPLIED POLYMER SCIENCE, vol. 90, 22 December 2002 (2002-12-22), pages 197-202) discloses the reaction of soybean oil triglycerides with maleic anhydride in the absence of a double bond isomerization catalyst to form a maleinized soybean oil. The maleinized soybean oil is then polymerized with diols to give a polymeric half-ester. However, such polyols may not be suitable for use in high resilience and rigid polyurethane foams due to their limited functionality.

Therefore, there is a need for a polyol based on renewable feedstocks that may also be used for producing high resilience and rigid polyurethane foams as well as in producing elastomers, adhesives, and coatings.

### Summary

Embodiments of the invention provide methods for modifications of natural oils or fats to compounds suitable for the production of both flexible and rigid polyimide, polyimide-polyurethane, polyamide-polyurethane, and polyurethane foams, as well as elastomers, adhesives and coatings, and for methods of producing such,modified natural oils or fats, foams, elastomers, adhesives, and coatings.

In one embodiment of the invention, a method for producing a polyol is provided. The method includes providing at least one natural oil or fat having at least one ene moiety, reacting the at least one natural oil or fat with at least one of an enophile or enophile/dienophile mixture in absence of a double bond isomerization catalyst to form at least one modified natural oil, and reacting the at least one modified natural oil with at least one alkylene oxide in the presence of at least one double metal cyanide catalyst to form at least one alkoxylated modified natural oil polyol. In one embodiment, the at least one modified natural oil may be reacted with at least one ring opener to form at least one ring opened modified natural before being reacted with the at least one alkylene oxide in the presence of at least one double metal cyanide catalyst to form the at least one alkoxylated modified natural oil polyol.

In another embodiment, an alkoxylated modified natural oil polyol is provided, and includes a reaction product of at least one natural oil or fat having at least one ene moiety, at least one of an enophile or enophile/dienophile mixture, and at least one alkylene oxide. The reaction product is formed in the presence of at least one double metal cyanide catalyst and in absence of a double bond isomerization catalyst.

In another embodiment, an alkoxylated modified natural oil polyol is provided. The polyol includes a reaction product of at least one alkylene oxide and at least one modified natural oil. The at least one alkylene oxide and the at least one modified natural oil are reacted in the presence of a double metal cyanide catalyst. The at least one modified natural oil includes a reaction product of at least one natural oil or fat and at least one of an enophile or enophile/dienophile mixture in absence of a double bond isomerization catalyst. The at least one natural oil or fat includes at least one ene moiety.

In another embodiment, an alkoxylated modified natural oil polyol is provided. The polyol includes a reaction product of at least one alkylene oxide and at least one ring opened modified natural oil. The at least one alkylene oxide and the at least one ring opened modified natural oil are reacted in the presence of a double metal cyanide catalyst, and the at least one ring opened modified natural oil includes a reaction product of at least one ring opener and at least one modified natural oil. The at least one modified natural oil includes a reaction product of at least one natural oil or fat and at least one of an enophile or enophile/dienophile mixture in absence of a double bond isomerization catalyst. The at least one natural oil or fat includes at least one ene moiety.

In another embodiment, a polyurethane is provided. The polyurethane is a reaction product of at least one isocyanate and a polyol blend including the alkoxylated modified natural oil polyol described above.

In an other embodiment, a method for producing a polyurethane is provided. The method includes providing at least one natural oil or fat comprising at least one ene moiety, reacting the at least one natural oil or fat with at least one of an enophile or enophile/dienophile mixture to form at least one modified natural oil, reacting the at least one modified natural oil with at least one alkylene oxide in the presence of at least one double metal cyanide catalyst to form at least one alkoxylated modified natural oil polyol, forming a polyol formulation comprising the at least one alkoxylated modified natural oil polyol, reacting the polyol formulation with at least one isocyanate to form a polyurethane.

In another embodiment, a method for producing a polyurethane is provided. The method includes providing at least one natural oil or fat comprising at least one ene moiety, reacting the at least one natural oil or fat with at least one of an enophile or enophile/dienophile mixture to form at least one modified natural oil, reacting the at least one modified natural oil with at least one ring opener to form at least one ring opened modified natural oil, reacting the at least one ring opened modified natural oil with at least one alkylene oxide in the presence of at least one double metal cyanide catalyst to form at least one alkoxylated modified natural oil polyol, forming a polyol formulation comprising the at least one alkoxylated modified natural oil polyol, reacting the polyol formulation with at least one isocyanate to form a polyurethane.

### Brief Description of the Drawing

So that the manner in which the above recited features of the present invention can be understood in detail, a more particular description of the invention, briefly summarized above, may be had by reference to embodiments, some of which are illustrated in the appended drawing. It is contemplated that elements and features of one embodiment may be beneficially incorporated in other embodiments without further recitation. It is to be noted, however, that the appended drawings illustrate only exemplary embodiments of this invention and are therefore not to be considered limiting of its scope, for the invention may admit to other equally effective embodiments.

Figure 1 is a flow diagram of several possible processes according to embodiments of the invention.

### Detailed Description

Embodiments of the invention provide for natural oil based compounds suitable both for flexible and rigid polyurethane foams, as well as elastomers, adhesives, and coatings, and for methods of producing such compounds and products. The natural oil based compounds may be made in a highly economic manner while at the same time maintaining low levels of volatile organic compounds in the foams.

Figure 1 depicts a general outline of how examples of such natural oil based compounds may be made according to embodiments of the invention. The embodiments may begin with a natural oil.

The natural oils are derived from renewable feedstock resources such as natural and/or genetically modified (GMO) plant vegetable seeds and/or animal source fats. Such plant vegetable seeds or animal source fats include oils and/or fats that are generally comprised of triglycerides, that is, fatty acids linked together with glycerol. For example, vegetable oils may have at least about 70 percent unsaturated fatty acids in the triglyceride. Such unsaturated fatty acids have at least one allylic hydrogen or "ene moiety" present in the fatty portion of the fatty acid. The natural product may contain at least about 85 percent by weight unsaturated fatty acids. Examples of vegetable oils include those from castor, soybean, olive, peanut, rapeseed, corn, sesame, cotton, canola, safflower, linseed, palm, grapeseed, black caraway, pumpkin kernel, borage seed, wood germ, apricot kernel, pistachio, almond, macadamia nut, avocado, sea buckthorn, hemp, hazelnut, evening primrose, wild rose, thistle, walnut, sunflower, jatropha seed oils, or a combination thereof. Additionally, oils obtained from organisms such as algae may also be used. Examples of animal products include lard, beef tallow, fish oils and mixtures thereof. A combination of vegetable, algae, and/or animal based oils/fats may also be used. The natural oils or fats may be subjected to a process to isomerize any isolated double bonds, as described in U.S. Patent Nos. 3,784,537 and 3,984,444.

The natural oils, as described herein, also includes the fatty acids or fatty acid esters derived from the natural oils or fats. That is, the term 'natural oil" also includes unsaturated fatty acids and the corresponding esters thereof. Examples of such unsaturated fatty acids include oleic acid (CH₃(CH₂)₇CH=CH(CH₂)₇COOH), myristoleic acid (CH₃(CH2)₃CH=CH(CH₂)₇COOH), palmitoleic acid (CH₃(CH₂)₅CH=CH(CH₂)₇COOH), oleic acid (CH₃(CH₂)₇CH=CH(CH₂)₇COOH), linoleic acid (CH₃(CH₂)₄CH=CHCH₂CH=CH(CH₂)₇COOH), α-linolenic acid (CH₃CH₂CH=CHCH₂CH=CHCH₂CH=CH(CH₂)₇COOH), arachidonic acid (CH₃(CH₂)₄CH=CHCH₂CH=CHCH₂CH=CHCH₂CH=CH(CH₂)₃COOH), icosapentaenoic acid (CH₃CH₂CH=CHCH₂CH=CH-CH₂CH=CHCH2CH=CHCH₂CH=CH(CH₂)₃COOH), erucic acid (CH₃(CH₂)₇CH=CH(CH₂)₁₁COOH), and docosahexaenoic acid (CH₃CH₂CH=CHCH₂CH=CH-CH₂CH=CHCH₂CH=CHCH₂CH=CHCH₂CH=CH(CH₂)2COOH)

The natural oils, or combination thereof, are reacted with an enophile or enophile/dienophile mixture that contains acid, half ester or anhydride functionality to form a Modified Natural Oil (MNO). Examples include, but are not limited to, maleic anhydride, fumaric acid, maleic acid, itaconic anhydride, citraconic ahydride, acrylic acid and maleic acid half esters. The reaction of the natural oils and the enophile or enophile/dienophile mixture may be performed in a substantial absence of a double bond isomerization catalyst, such as iodine. Reactions of linoleic and linolenic acid rest containing natural oils with enophiles/dienophiles are well known. In instances where no double bond isomerization catalyst (e.g. iodine) is present and the temperature is above about 200° C, the reaction is known as the Alder-ene reaction where the addition occurs at a double bond site in the fatty acid chain forming an Alder-ene adduct, accompanied by diallylic shift of double bonds forming conjugated diene system. Such conjugated diene systems are the subject for a subsequent Diels-Alder cycloaddition reaction with a following equivalent of enophile/dienophile.

By avoiding the use of iodine, it is possible to improve the yield of diadduct for linoleic and linolenic acid rests, and more essentially, promote Alder-ene addition for the oleic acid rest, where it may be the only possible functionalization pathway in given conditions. Thus, not using iodine catalyst allows one to achieve a higher degree of natural oil functionalization and introduce more enophile/dienophile moieties on average onto the natural oil backbone. The addition of iodine allows one to perform the reaction at lower temperatures at a trade-off of lower functionalization degree.

In one non-limiting embodiment, maleic anhydride is reacted with an oil as seen in Scheme (I):

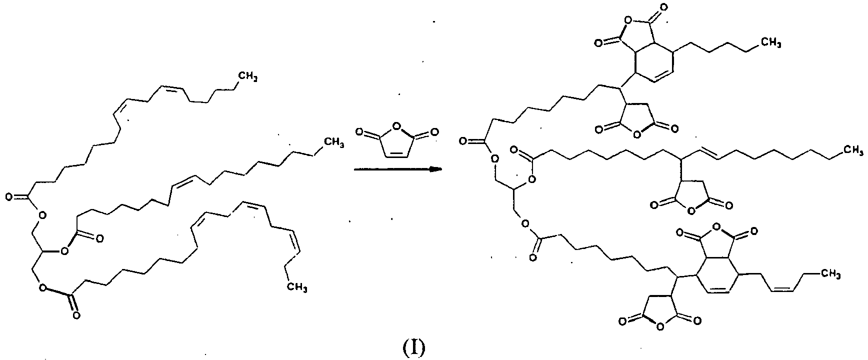

In the depicted particular example of Scheme (I), used for non-limiting illustration purposes only, the oil include the fatty acid rests of linoleic acid, oleic acid, and linolenic acid. The oil and/or fat composition may vary depending on the source of the oil and/or fat. Various combinations of the fatty acids linked with glycerol are possible, and may, in addition to unsaturated fatty acids, include saturated fatty acids such as stearic acid and palmitic acid. Another fatty acid may be ricinoleic acid, however interference between the hydroxyl of ricinoleic acid and the enophile may occur. The reaction of Scheme (I) may be performed at elevated temperatures, such as between about 150°C and about 300°C, about 170°C and about 200°C, or between about 180°C and about 230°C. The reaction time may be between about 0.5 hours and about 10 hours. In one embodiment the reaction time is between about 1 hour and about 5 hours, and in another embodiment, between about 2 hours and 4 hours.

In another embodiment, methyl oleate or oleic acid triglyceride may be reacted with maleic anhydride to afford 1:1 adducts resulting from Alder-ene addition. In another embodiment, methyl linoleate or linoleic acid triglyceride may be reacted with maleic anhydride to afford 1:1 adducts resulting from Alder-ene addition and 1:2 adducts formed by Alder-ene addition followed by Diels Alder cycloaddition.

As depicted in Figure 1, the modified natural oils may be reacted with a suitable ring opener to form a Ring Opened Natural Oil (RONO). An optional ring opener may be used to optionally open the cyclic anhydride rings present when the enophile or enophile/dienophile mixture includes an anhydride, such as maleic anhydride depicted in the non-limiting Scheme (II). The ring opener may be of the formula R-OH, where R is H, an alkyl chain, an aminoalkyl chain, hydroxyalkyl chain, aryl, aminoaryl or hydroxyaryl substituent. In one embodiment the ring opening agent is at least one of water and monopropylene glycol (1,2-propanediol). In another embodiment the ring opening agent is at least one of 2-hydroxypropylamine and bis(2-hydroxypropyl)amine. The reaction of Scheme (II) may be performed at elevated temperatures, such as between about 40°C and about 140°C, about 50°C and about 100°C, or between about 65°C and about 70°C. The reaction time may be between about 0.5 hours and about 24 hours or more. In one embodiment the reaction time is between about 1 hour and about 24 hours, and in another embodiment, between about 2 hours and 8 hours, depending on viscosity of the reagents and stirring efficiency.

Both the MNO and RONO may exhibit a linear strain response to shear stress indicating they are newtonian liquids and not crosslinked polymers.

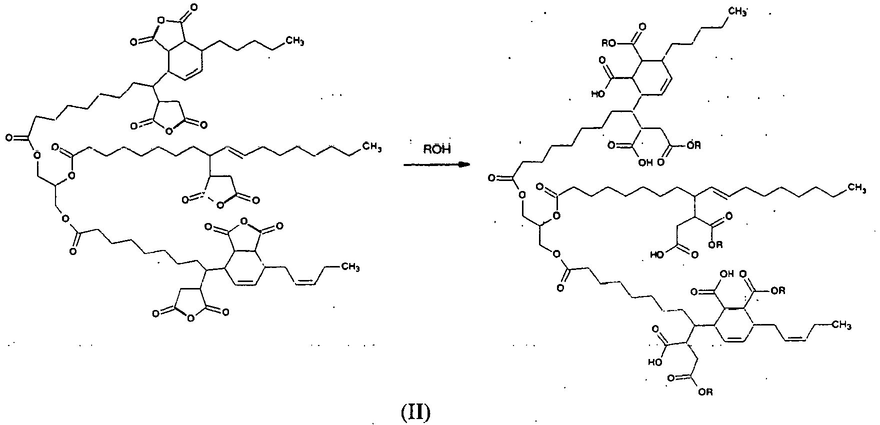

As further depicted in Figure 1, the ring opened natural oil may then be alkoxylated to form Alkoxylated Modified Natural Oil Polyols (AMNOP). Scheme (III) represents a non-limiting exemplarily alkoxylation reaction, where the modified natural oils from Scheme (II) are reacted with propylene oxide in the presence of a DMC (double metal cyanide) catalyst. Alternatively, the alkoxylation described in relation to Scheme (III) may be performed directly on the modified natural oils resulting from the reaction of the natural oil and eneophile or enophile/dienophile mixture (as symbolized by the dashed lines in Figure 1).

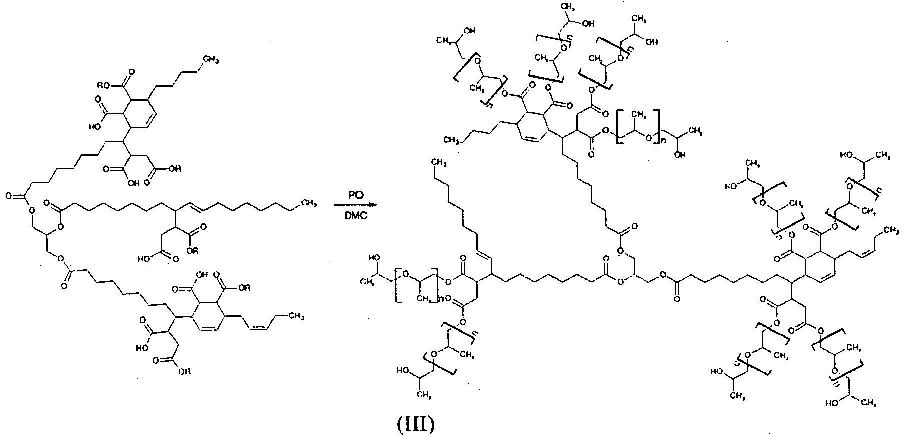

The alkoxylation of Scheme (III) may be performed by first mixing the modified natural oils and catalyst. The dispersion of solid catalyst may be homogenized with a commercially available homogenizer, such as an IKA Ultra Turrax T25. In one embondiment the dispersion is homogenized at about 20000 rpm for about 7 minutes. The catalyst may alternatively be dispersed in a solvent and then mixed with the modified natural oils. The solvent may be a non-protic polar solvent such as acetone, DMSO or THF. Alternatively the solvent may be a non-protic non-polar solvent such as benzene, toluene or xylene. While stirring, the mixture may be flushed several times with an inert gas, such as nitrogen or argon. The inert gas may be introduced such that the internal pressure of the reaction vessel is between about 1 bar and about 10 bar, preferably between about 2 bar and about 5 bar. In one embodiment, the resulting pressure is 3.5 bar. Stirring may be performed at between about 10 rpm and about 1000 rpm, preferably between about 100 rpm and about 700 rpm. In one embodiment the stirring is performed at about 500 rpm. While continuing to stir the mixture, a vacuum may be applied to reduce the pressure in the reaction vessel to about 0.01-0.1 bar.

The mixture of catalyst and modified natural oils (initiator) are then heated to between about 90°C and about 160°C, preferably between about 110°C and about 130°C, and then pressurizing the reactor with an initial quantity of alkylene oxide, until a pressure is reached in the reaction vessel of between about 1 bar and about 10 bar, preferably between about 2 bar and about 5 bar. In one embodiment, the mixture is heated to about 120 °C, and the reaction vessel pressurized with alkylene oxide to about 3 bars. The reaction may progress at a slow reaction rate for about 0-30 hours, as indicated by a slowly decreasing pressure in the reactor. During this time a reaction between the carboxylic acid groups of the modified natural oils and the alkylene oxide may occur until the carboxylic acid groups have reacted and formed an ester linkage with the alkylene oxide. The initial reaction rate may be modified depending on the solvent the catalyst is dispersed in. For example, if the catalyst is dispersed in a non-polar solvent, such as toluene, or no solvent is used and the polymerization medium is the modified natural oil itself, the modified natural oils and DMC catalyst particles may form stable micelles with the hydrophobic hydrocarbon chains forming the outer layer of the micelle and the more hydrophilic ester and hydroxyl functionality parts of the modified natural oils together with the catalyst particle forming the core of the micelle. If such micelle form, steric hindrance may hinder the alkylene oxide from entering the active site of the modified natural oil, which may result in a slow reaction of carboxylic acid groups with the alkylene oxide. By adding, or instead using, more polar or hydrophilic solvents or co-initiators (such as citric acid, succinic acid, glycerine, MPG or the mixtures thereof, etc.), to dilute the modified natural oil and thus to invert the polarity of the polymerization medium, the micelles may not be formed or reverse micelle may be formed with the hydrophilic functionality of the modified natural oils together with the catalyst particle forming the outer layer and the hydrophobic hydrocarbon chain forming the core of the micelles. In either case, active sites of the modified natural oil become accessible for the alkylene oxide molecules. As the alkylene oxide reaches active sites on the catalyst surface together with the reactive carboxyl and/or hydroxyl sites on the modified natural oils and/or on the co-initiator, an onset of rapid polymerization follows as indicated by a drop in pressure as the alkylene oxide is consumed. If the alkoxylation is performed in pure modified natural oils or in modified natural oils diluted with a non-polar solvent, the onset of rapid polymerization takes place when a majority of carboxylic groups are capped with alkylene oxide, typically after about 12-24 hours. In some embodiments rapid polymerization may only take place upon the reaction of alkylene oxide with all the carboxylic acid groups of the modified natural oils to form ester groups.

If no hydrophilic solvent or co-initiator is used, depending on the desired degree of alkoxylation, all the necessary alkylene oxide may be added to the reactor at the outset. However, it is also possible to add more alkylene oxide to the reactor once the reaction rate increases as carboxylic acid groups are converted into esters. If the polymerization medium is hydrophilic enough to prevent formation of hydrophobic micelles with the catalyst particles in the core, the induction period is virtually absent for ethylene oxide and propylene oxide monomers, such that DMC alkoxylation starts immediately. A convenient way of adding the alkylene oxide is to pressurize the reactor manually or automatically with alkylene oxide and allow alkylene oxide to feed to the reactor on demand, maintaining a more or less constant pressure inside the reactor. Alternatively, any additional alkylene oxide may be fed in one or more discrete increments. In one embodiment, the reaction vessel is maintained at about 160°C and alkylene oxide is fed to the reaction vessel over a period of between about ½ hour and about 1.5 hours at a feed rate of between about 300 g/hour and about 900 g/hour.

The total amount of alkylene oxide that is fed will depend on the desired equivalent weight of the product. As few as one mole of alkylene oxide per equivalent carboxylic, hydroxyl, and/or inorganic acid-group of modified oil and/or co-initiator may be added. The embodiments of the invention are well suited for adding of at least about 1 mole of alkylene oxide per equivalent acid-group or hydroxyl-group of modified oil and/or co-initiator. Sufficient alkylene oxide can be added to make any desirable molecular weight polyether, such as one having a weight average molecular weight of 200,000 daltons or more. However, in most cases the intended end-use of the product will dictate its molecular or equivalent weight. Thus, for example, for making polyols for polyurethane applications, polyether equivalent weights of from about 75-300 are of particular interest for rigid polyurethane foams, equivalent weights of from about 300-1300 are of particular interest for making molded foams and high resilience slabstock foams, and equivalent weights of from about 800-3000 are of particular interest for making conventional slabstock foam and reaction injection molded elastomers. For surfactant applications, molecular weights of from about 350 to about 6000 are of particular interest. In most applications, it is desirable that the product be a liquid. Poly(oxyethylene) homopolymers tend to form solids when their weight average molecular weights exceed about 700 Daltons. All weights reported above are number average molecular weights.

Similarly, the selection of alkylene oxide will depend to a large extent on the intended end-use of the product. Among the alkylene oxides that can be polymerized with the catalyst complex of the invention are ethylene oxide, propylene oxide, 1,2-butylene oxide, styrene oxide, and epichlorohydrin. Mixtures of these can be used, and two or more of them can be polymerized sequentially to make block copolymers. For polyurethanes applications, preferred alkylene oxides are propylene oxide alone, mixtures of at least 50 weight % propylene oxide and up to about 50 weight % ethylene oxide (to form a random copolymer), and propylene oxide followed by ethylene oxide, so as to form terminal poly(oxyethylene) chains constituting up to about 30% of the total weight of the product. For other applications, ethylene oxide alone, 1,2-hutylene oxide, ethylene oxide/1,2-butylene oxide mixtures, ethylene oxide followed by propylene oxide or butylene oxide, butylene oxide followed by ethylene and/or propylene oxide, propylene oxide alone, mixtures of propylene oxide and ethylene and/or butylene oxide, and propylene oxide followed by ethylene and/or butylene oxide are preferred alkylene oxides.

In addition, monomers that will copolymerize with the alkylene oxide in the presence of the catalyst complex can be used to prepare modified polyether polyols, after the catalyst has become activated. Such comonomers include oxetanes as described in U. S. Patent Nos. 3,278,457 and 3,404,109 and anhydrides as described in U. S. Patent Nos. 5,145,883 and 3,538,043, which yield polyethers and polyester or polyetherester polyols, respectively. Lactones as described in U. S. Patent No. 5,525,702 and carbon dioxide are examples of other suitable monomers that can be polymerized with the catalyst of the invention.

The polymerization reaction may be performed continuously or batchwise. In such continuous processes, the modified oil/hydrophilic co-initiator or solvent/catalyst mixture is continuously fed into a continuous reactor such as a continuously stirred tank reactor (CSTR) or a tubular reactor. A feed of alkylene oxide is introduced into the reactor and the product continuously removed.

In another embodiment of the invention, the AMNOP may be produced by charging a reactor with at least one natural oil or fat, at least one of an enophile or enophile/dienophile mixture, and at least one double metal cyanide catalyst. The mixture may be heated to between about 150°C and about 300°C, about 170°C and about 200°C, or between about 180°C and about 230°C. Vacuum may be applied to reduce the pressure in the reactor. At least one alkylene oxide may then be introduced to the reactor over time maintaining a pressure in the reaction vessel of between about 1 bar and about 10 bar, preferably between about 2 bar and about 5 bar. The mixture is then maintained at temperatures of between about 90°C and about 160°C, preferably between about 110°C and about 130°C. In one embodiment, the mixture is heated to about 120 °C, and the reaction vessel pressurized with alkylene oxide to about 3 bars.

In the various embodiments of the invention, the concentration of the catalyst may be selected to polymerize the alkylene oxide at a desired rate or within a desired period of time. Generally, a suitable amount of catalyst is from about 5 to about 10,000 parts by weight metal cyanide catalyst complex per million parts of the product. For determining the amount of catalyst complex to use, the weight of the product is generally considered to equal the combined weight of alkylene oxide and modified oils, plus any comonomers that may be used. More preferred catalyst complex levels are from about 10 to about 10000, especially from about 25, to about 1000. In one embodiment, the amount of catalyst is about 50 ppm.

In some embodiments, a DMC compound may comprise a reaction product of a water-soluble metal salt and a water-soluble metal cyanide salt. A water-soluble metal salt may have the general formula M(X)ₙ in which M is a metal and X is an anion. M may be selected from Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II), and Cr(III). It may be desirable in some embodiments for M to be selected from Zn(II), Fe(II), Co(II), and Ni(II). X may be an anion selected from a halide, a hydroxide, a sulfate, a carbonate, a cyanide, and oxylate, a thiocyanate, an isocyanate, an isothiocyanate, a carboxylate, and a nitrate. The value of n may be from 1 to 3 and satisfy the valency state of M. Examples of a suitable metal salt may include, without limitation, zinc chloride, zinc bromide, zinc acetate, zinc acetonylacetonate, zinc benzoate, zinc nitrate, iron(II) sulfate, iron(II) bromide, cobalt(II) chloride, cobalt(II) thiocyanate, nickel(II) formate, nickel(II) nitrate, and the like, and mixtures thereof.

A water-soluble metal cyanide salt may have the general formula (Y)ₐM'(CN)_{b}(A)_{c}, in which M' may be selected from Fe(II), Fe(III), Co(II), Co(III), Cr(II), Cr(III), Mn(II), Mn(III), Ir(III), Ni(II), Rh(III), Ru(II), V(IV), V(V), and combinations thereof It may be desirable in some embodiments for M' to be selected from Co(II), Co(III), Fe(II), Fe(III), Cr(III), Ir(III), Ni(II), and combinations thereof. In the formula, Y may be an alkali metal ion or alkaline earth metal ion. A may be an ion selected from the group consisting of halide, hydroxide, sulfate, carbonate, cyanide, oxalate, thiocyanate, isocyanate, isothiocyanate, carboxylate, and nitrate. Both a and b are integers equal to or greater than 1. In addition, the sum of the charges of a, b, and c balances the charge of M'. Examples of a suitable metal cyanide salt may include, without limitation, potassium hexacyanocobaltate(III), potassium hexacyanoferrate(II), potassium hexacyanoferrate(III), calcium hexacyanocobaltate(III), lithium hexacyanocobaltate(III), and the like.

Examples of a double metal cyanide compound may include, without limitation, zinc hexacyanocob altate(III), zinc hexacyanoferrate(III), nickel hexacyanoferrate(II), and/or cobalt hexacyanocobaltate(III). In some embodiments, it may be desirable to use zinc hexacyanocobaltate(III).

A solid DMC catalyst, according to some embodiments, may include an organic complexing agent. Generally, it may be desirable (e.g., necessary) for a complexing agent to be relatively soluble in water. Examples of some suitable complexing agents are elaborated in U.S. Pat. No. 5,158,922. A complexing agent may be added during preparation and/or immediately following precipitation of the catalyst. An excess amount of the complexing agent may be used. A complexing agent may comprise a water-soluble heteroatomcontaining organic compound that may complex with a double metal cyanide compound. For example, complexing agents may include alcohols, aldehydes, ketones, ethers, esters, amides, ureas, nitriles, sulfides, and mixtures thereof Specific example embodiments of a complexing agent may include, without limitation, a water-soluble aliphatic alcohol selected from ethanol, isopropyl alcohol, n-butyl alcohol, isobutyl alcohol, sec-butyl alcohol, and tertbutyl alcohol. In some embodiments, it may be desirable to use a complexing agent comprising tert-butyl alcohol.

In some embodiments, a solid DMC catalyst may include from about 5 to about 80 wt. %, based on amount of catalyst, of a polyether. For example, it may be desirable to include from about 10 to about 70 wt. % of the polyether. It may be desirable to include from about 15 to about 60 wt. % of the polyether.

A polyether polyol, in some embodiments, may have (e.g., an average of) from about 1 to about 8 hydroxyl functionalities. In some embodiments, a polyether polyol may have a molecular weight (e.g., a number average molecular weight) of from about 200 to about 10,000. A polyether polyol may be made by polymerizing an epoxide in the presence of an active hydrogen-containing initiator and a basic, acidic, or organometallic catalyst (e.g., a DMC catalyst), in some embodiments. Examples of a polyether polyol may include, without limitation, poly(propylene glycol)s , poly(ethylene glycol)s , EO-capped poly(oxypropylene) polyols, mixed EO-PO polyols, butylene oxide polymers, butylene oxide copolymers with ethylene oxide and/or propylene oxide, polytetramethylene ether glycols, and the like. Examples of a polyether polyol may include, without limitation, tripropylene glycol, triethylene glycol, tetrapropylene glycol, tetraethylene glycol, dipropylene glycol monomethyl ether, tripropylene glycol monomethyl ether, monoalkyl and dialkyl ethers of glycols and poly(alkylene glycol)s, and the like. In some embodiments, poly(propylene glycol)s and poly(ethylene glycol)s having number average molecular weights within the range of about 150 to about 500 may be used. An organic complexing agent and a polyether, according to some embodiments, may be used in a double metal cyanide catalyst.

A DMC compound, in some embodiments, may have the general formula I as catalyst:

M¹ₐ[M²(CN)_{b}(A)_{c}]_{d}·fM¹_{g}Xₙ·h(H₂O)·eL·kP

wherein
M¹ is at least one metal ion selected from the group consisting of Zn²⁺, Fe²⁺, Fe³⁺ Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺_{,} W⁶⁺, Cr²⁺, Cr³⁺, Cd²⁺, Hg²⁺, Pd²⁺, Pt²⁺, V²⁺, Mg²⁺, Ca²⁺, Ba²⁺, Cu²⁺, La³⁺, Ce³⁺, Ce⁴⁺, Eu³⁺, Ti³⁺, Ti⁴⁺, Ag⁺, Rh³⁺, Rh³⁺, Ru²⁺, Ru³⁺,
M² is at least one metal ion selected from the group consisting of Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺,
A and X are each, independently of one another, an anion selected from the group consisting of halide, hydroxide, sulfate, carbonate, cyanide, thiocyanate, isocyanate, cyanate, carboxylate, oxalate, nitrate, nitrosyl, hydrogensulfate, phosphate, dihydrogenphosphate, hydrogenphosphate and hydrogencarbonate,
L is a water-miscible ligand selected from the group consisting of alcohols, aldehydes, ketones, ethers, polyethers, esters, polyesters, polycarbonate, ureas, amides, primary, secondary and tertiary amines, ligands having a pyridine nitrogen, nitriles, sulfides, phosphides, phosphites, phosphanes, phosphonates and phosphates,
k is a fraction or integer greater than or equal to zero, and
P is an organic additive,
a, b, c, d, g and n are selected so that the compound (I) is electrically neutral, with c being able to be 0,
e is the number of ligand molecules and is a fraction or integer greater than 0 or is 0,
f and h are each, independently of one another, a fraction or integer greater than 0 or 0.

Examples of an organic additive P may include, without limitation, polyethers, polyesters, polycarbonates, polyalkylene glycol sorbitan esters, polyalkylene glycol glycidyl ethers, polyacrylamide, poly(acrylamide-co-acrylic acid), polyacrylic acid, poly(acrylamide-comaleic acid), polyacrylonitrile , polyalkyl acrylates , polyalkyl methacrylates, polyvinyl methyl ether, polyvinyl ethyl ether, polyvinyl acetate, polyvinyl alcohol, poly-N-vinylpyrrolidone, poly(N-vinylpyrrolidone -co-acrylic acid), polyvinyl methyl ketone, poly(4 -vinylphenol), poly(acrylic acid-co-styrene), oxazoline polymers, polyalkylenimines, maleic acid and maleic anhydride copolymers, hydroxyethylc ellulose, polyacetates, ionic surface- and interface-active compounds, bile acids or their salts, esters or amides, carboxylic esters of polyhydric alcohols and glycosides.Examples of some DMC catalysts and their preparation may be found in U.S. Patent Nos. 3,427,334; 3,941,849; 4,477,589; 5,158,922; 5,470,813; 5,482,908; and 7,348,460.

The resulting alkoxylated modified natural oil polyol (AMNOP) contains one or more chains of oxyalkylene groups that are bonded to the modified natural oils through a heteroatom. The heteroatom is preferably oxygen and the linkage is most preferably an ester linkage.

The AMNOP is typically prepared in good yield with only small amounts of undesired by-products. In some instances, the AMNOP may contain a high molecular weight fraction that has a weight average molecular weight of 1.5X or more of that of the desired product. Typically, when this fraction is present, it constitutes about 20% or less, more typically less than about 10% of the total weight of the AMNOP.

Other than the high molecular weight fraction, the embodiments of the invention permit the alkoxylation of a wide range of modified oils with the formation of few by-products. By-products other than unreacted starting materials and the high molecular weight fraction typically constitute less than about 10% by weight of the AMNOP, more typically less than about 5 weight percent and even more typically less than about 2 weight percent.

The AMNOP is generally characterized by having a good polydispersity, typically less than about 3.0, more typically less than about 1.6 and preferably less than about 1.2, as crude products before purification to remove high molecular weight species.

Surprisingly, it has been found that the ester groups of the natural oil remain intact as the natural oil is transformed into the alkoxylated modified natural oil polyol (AMNOP). Because the natural oil ester groups remain intact, a high functionality polyol may be obtained. The high functionality makes the AMNOP suitable for use in both flexible and rigid polyurethane foams. Natural oil based polyols have typically had use in mostly flexible foams and only limited use in rigid foams. However, because the AMNOP of the embodiments of the present invention have a high functionality, and thus have high cross linking properties, the AMNOP may be used in high resilience flexible foams and in flexible foams, as well as in conventional flexible foams. Depending on whether the natural starting material is a fatty acid, fatty acid methyl ester, oil, or fat, the functionality of the AMNOP may be between about 1 and about 12. All individual values and subranges from 1 to 12 are included herein and disclosed herein; for example, the functionality can be from a lower limit of 1, 2, 3, 4, 5, 7, 9, or 10 to an upper limit of 2, 3, 4, 5, 7, 9, 10, or 12. For example, the AMNOP may have a functionality in the range of 2 to 8; or in the alternative, the AMNOP may have a functionality in the range of 4 to 8; or in the alternative, the AMNOP may have a functionality in the range of 6 to 8; or in the alternative, the AMNOP may have a functionality in the range of 2 to 6 or in the alternative, the AMNOP may have a functionality in the range of 4 to 6; or in the alternative, the AMNOP may have a functionality in the range of 2 to 4. The higher the number of double bonds present in fatty chain of the starting material, the higher the functionality of the AMNOP will be. "Bodying" effect (thermal or radical crosslinking of double bonds) takes place during the reaction of natural oils with enophile which is performed typically at high temperatures (200-230°C). This increases the functionality and the molecular weight of the AMNOP and also results in broader polydispersity.

AMNOP functionality may also be adjusted either by changing the ratio of enophile to vegetable oil, by using iodine or other double bond isomerization catalyst or by using different enophiles. For example, acrylic acid may give one carboxylic group per double bond of the vegetable oil, while maleic anhydride or maleic acid may give 2 carboxylic groups. It is also possible to combine the different enophiles at various ratios to form AMNOPS with various functionalities. Furthermore, the functionality of the AMNOP may also be adjusted by using different ring openers such as when using maleic anhydride. For instance, by using a diol, such as water, 1,2-propanediol or secondary amino alcohols, such as 2-hydroxypropyl-N-methylamine it is possible to obtain two reactive groups per ring opened. By combining monol and diol it is possible engineer a suitable functionality of the polyols. The use of 1,2,3-butanetriol or bis-(2-hydroxypropyl)-amine allows to introduce three functions per anhydride moiety. Primary alkylamines, such as 1-amino-2-propanol, give 1 function per anhydride moiety due to ease of dehydration of adjacent carboxylic acid/monoalkylamide groups. However, when using amino alcohols, care may be applied to avoid local overheating as the reaction may increase the viscosity of the mixture and be highly exothermic. Furthermore, salt formation with carboxylic acid groups may occur which may result in oil separation.

With the use of glycerine, three functions can be introduced per anhydride moiety. By using a tetrol, such as pentaerythritol, one can introduce four reactive groups per anhydride moiety. However, highly crosslinked material (gel) may be produced in such cases.

The AMNOP of the various embodiments may have a low or medium amount of high molecular weight tails. High contents of high-molecular-weight tails make the molecular weight distribution of a polyol broader which may result in an unacceptably high viscosity. The high molecular weight fraction may be the result of double bond crosslinking during the reaction of natural oil with enophile/dienophile. The processes of the various embodiments described herein improve the equivalent molecular weight distribution in the AMNOP. Typically for natural oil polyols, which have high amount of non-functional branches, "bodying" allows for the homogenization of equivalent molecular weights due to the initially inhomogeneous functionality distribution and thus improve the control of crystalline behavior due to large non-functional branches. For example, soy-based AMNOP's may contain about 15% of saturated fatty acid chains.

However, having too high equivalent molecular weights may result a reduction of foam properties. For instance high-molecular-weight fractions of poly propylene polyols may compete with surfactant and may cause foam collapse. The AMNOP high molecular weight fraction may result not only from "bodying", but also from esterification of acid and/or ring opening of anhydride with polyol chain-ends. Such processes may increase equivalent molecular weight and alter the properties of the polyol which may contribute to reduced foam properties and may result in the foam collapsing.

Going back to Figure 1, the modified natural oil (MNO) may optionally be reacted with a primary amine to form a Succinimide Natural Oil Polyol (SNOP). The primary amine may be either a monoamine, such as aniline, or an amino alcohol including primary alkanolamine, aminobenzyl alcohol or aminophenol. Suitable examples include 2-hydroxypropylamine, ethanolamine, methanolamine, 4-aminobenzyl alcohol or 4-aminophenol. Scheme (IV) is a non-limiting embodiment of a monomaleated methyl oleate reacted with 2-hydroxypropylamine:

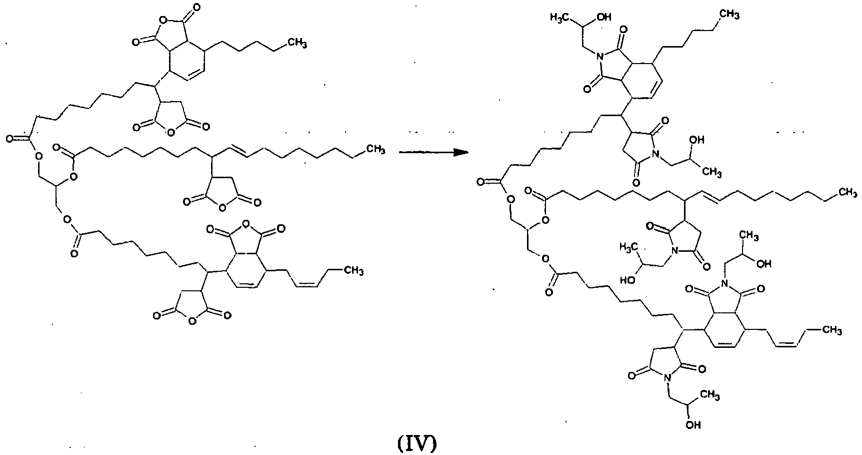

The reaction exemplified in Scheme (IV) may be performed at room temperature or elevated temperatures, such as between about 50°C and about 250°C. The reaction time may be between about 0.5 hours and about 14 hours.

The SNOP may be reacted with an isocyanate to form a succinimide-polyurethane containing product.

Alternatively, maleated MNO may be reacted directly with an isocyanate to form a succinimide containing product.

Furthermore, as seen in Figure 1, the RONO may be reacted directly with an isocyanate to form a polyamide or polyamide-polyurethane containing product.

The MNO, AMNOP, SNOP, and RONO may be used in a blend of polyols, or reacted neat. The polyol blend may include a mixture of MNO, AMNOP, SNOP, and/or RONO. Additionally, the polyol blend may include at least one conventional petroleum-based polyol. The at least one conventional petroleum-based polyol includes materials having at least one group containing an active hydrogen atom capable of undergoing reaction with an isocyanate, and not having parts of the material derived from a vegetable or animal oil. Suitable conventional petroleum-based polyols are well known in the art and include those described herein and any other commercially available polyol. Mixtures of one or more polyols and/or one or more polymer polyols may also be used to produce polyurethane products according to embodiments of the present invention.

Representative polyols include polyether polyols, polyester polyols, polyhydroxy-terminated acetal resins, hydroxyl-terminated amines and polyamines. Alternative polyols that may be used include polyalkylene carbonate-based polyols and polyphosphate-based polyols. Preferred are polyols prepared by adding an alkylene oxide, such as ethylene oxide, propylene oxide, butylene oxide or a combination thereof, to an initiator having from 2 to 8, preferably 2 to 6 active hydrogen atoms. Catalysis for this polymerization can be either anionic or cationic, with catalysts such as KOH, CsOH, boron trifluoride, or a double cyanide complex (DMC) catalyst such as zinc hexacyanocobaltate or quaternary phosphazenium compound. The initiators suitable for the natural oil based polyols may also be suitable for the at least one conventional petroleum-based polyol.

The at least one conventional petroleum-based polyol may for example be poly(propylene oxide) homopolymers, random copolymers of propylene oxide and ethylene oxide in which the poly(ethylene oxide) content is, for example, from about 1 to about 30% by weight, ethylene oxide-capped poly(propylene oxide) polymers and ethylene oxide-capped random copolymers of propylene oxide and ethylene oxide. For slabstock foam applications, such polyethers preferably contain 2-5, especially 2-4, and preferably from 2-3, mainly secondary hydroxyl groups per molecule and have an equivalent weight per hydroxyl group of from about 400 to about 3000, especially from about 800 to about 1750. For high resilience slabstock and molded foam applications, such polyethers preferably contain 2-6, especially 2-4, mainly primary hydroxyl groups per molecule and have an equivalent weight per hydroxyl group of from about 1000 to about 3000, especially from about 1200 to about 2000. When blends of polyols are used, the nominal average functionality (number of hydroxyl groups per molecule) will be preferably in the ranges specified above. For viscoelastic foams shorter chain polyols with hydroxyl numbers above 150 are also used. For the production of semi-rigid foams, it is preferred to use a trifunctional polyol with a hydroxyl number of 30 to 80.

The polyether polyols may contain low terminal unsaturation (for example, less that 0.02 meq/g or less than 0.01 meq/g), such as those made using a DMC catalysts. Polyester polyols typically contain about 2 hydroxyl groups per molecule and have an equivalent weight per hydroxyl group of about 400-1500.

The conventional petroleum-based polyols may be a polymer polyol. In a polymer polyol, polymer particles are dispersed in the conventional petroleum-based polyol. Such particles are widely known in the art an include styrene-acrylonitrile (SAN), acrylonitrile (ACN), polystyrene (PS), methacrylonitrile (MAN), polyurea (PHD), or methyl methacrylate (MMA) particles. In one embodiment the polymer particles are SAN particles.

The conventional petroleum-based polyols may constitute up to about 10 weight %, 20 weight %, 30 weight %, 40 weight %, 50 weight %, 60 weight %, 70 weight %, or 80 weight % of the polyol blend. The conventional petroleum-based polyols may constitute at least about 1 weight %, 5 weight %, 10 weight %, 20 weight %, 30 weight %, or 50 weight % of polyol formulation.

In addition to the above described polyols, the polyol blend may also include other ingredients such as catalysts, silicone surfactants, preservatives, and antioxidants,

The polyol blend may be used in the production of polyurethane products, such as polyurethane foams, elastomers, microcellular foams, adhesives, coatings, etc. For example, the polyol blend may be used in a formulation for the production of flexible or rigid polyurethane foam. For the production of a polyurethane foam the polyol blend may be combined with additional ingredients such as catalysts, crosslinkers, emulsifiers, silicone surfactants, preservatives, flame retardants, colorants, antioxidants, reinforcing agents, fillers, including recycled polyurethane foam in form of powder.

Any suitable urethane catalyst may be used, including tertiary amine compounds, amines with isocyanate reactive groups and organometallic compounds. Exemplary tertiary amine compounds include triethylenediamine, N-methylmorpholine, N,N-dimethylcyclohexylamine, pentamethyldiethylenetriamine, tetramethylethylenediamine, bis (dimethylaminoethyl)ether, 1-methyl-4-dimethylaminoethyl-piperazine, 3-methoxy-N-dimethylpropylamine, N-ethylmorpholine, dimethylethanolamine, N-cocomorpholine, N,N-dimethyl-N',N'-dimethyl isopropylpropylenediamine, N,N-diethyl-3-diethylamino- propylamine and dimethylbenzylamine. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-laurate. A catalyst for the trimerization of isocyanates, resulting in a isocyanurate, such as an alkali metal alkoxide may also optionally be employed herein. The amount of amine catalysts can vary from 0 to about 5 percent in the formulation or organometallic catalysts from about 0.001 to about 1 percent in the formulation can be used.

One or more crosslinkers may be provided, in addition to the polyols described above. This is particularly the case when making high resilience slabstock or molded foam. If used, suitable amounts of crosslinkers are from about 0.1 to about 1 part by weight, especially from about 0.25 to about 0.5 part by weight, per 100 parts by weight of polyols.

The crosslinkers may have three or more isocyanate-reactive groups per molecule and an equivalent weight per isocyanate-reactive group of less than 400. The crosslinkers preferably may include from 3-8, especially from 3-4 hydroxyl, primary amine or secondary amine groups per molecule and have an equivalent weight of from 30 to about 200, especially from 50-125. Examples of suitable crosslinkers include diethanol amine, monoethanol amine, triethanol amine, mono- di-or tri(isopropanol) amine, glycerine, trimethylol propane, pentaerythritol, and sorbitol.

It is also possible to use one or more chain extenders in the foam formulation. The chain extender may have two isocyanate-reactive groups per molecule and an equivalent weight per isocyanate-reactive group of less than 400, especially from 31-125. The isocyanate reactive groups are preferably hydroxyl, primary aliphatic or aromatic amine or secondary aliphatic or aromatic amine groups. Representative chain extenders include amines ethylene glycol, diethylene glycol, 1,2-propylene glycol, dipropylene glycol, tripropylene glycol, ethylene diamine, phenylene diamine, bis(3-chloro-4-aminophenyl)methane and 2,4-diamino-3,5-diethyl toluene. If used, chain extenders are typically present in an amount from about 1 to about 50, especially about 3 to about 25 parts by weight per 100 parts by weight high equivalent weight polyol.

A polyether polyol may also be included in the formulations, i.e, as part of the at least one conventional petroleum-based polyol, to promote the formation of an open-celled or softened polyurethane foam. Such cell openers generally have a functionality of 2 to 12, preferably 3 to 8, and a molecular weight of at least 5,000 up to about 100,000. Such polyether polyols contains at least 50 weight percent oxyethylene units, and sufficient oxypropylene units to render it compatible with the components. The cell openers, when used, are generally present in an amount from 0.2 to 5, preferably from 0.2 to 3 parts by weight of the total polyol. Examples of commercially available cell openers are VORANOL Polyol CP 1421 and VORANOL Polyol 4053; VORANOL is a trademark of The Dow Chemical Company.

The formulations may then be reacted with, at least one isocyanate to form a flexible polyurethane foam. Isocyanates which may be used in the present invention include aliphatic, cycloaliphatic, arylaliphatic and aromatic isocyanates.

Examples of suitable aromatic isocyanates include the 4,4'-, 2,4' and 2,2'-isomers of diphenylmethane diisocyante (MDI), blends thereof and polymeric and monomeric MDI blends, toluene-2,4- and 2,6-diisocyanates (TDI), m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

Mixtures of isocyanates may be used, such as the commercially available mixtures of 2,4- and 2,6-isomers of toluene diisocyantes. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. TDI/MDI blends may also be used.

Examples of aliphatic polyisocyanates include ethylene diisocyanate, 1,6-hexamethylene diisocyanate, isophorone diisocyanate, cyclohexane 1,4-diisocyanate, 4,4'-dicyclohexylmethane diisocyanate, 1,3-bis(isocyanatomethyl)cyclohexane, 1,4-bis(isocyanatomethyl)cyclohexane, saturated analogues of the above mentioned aromatic isocyanates, and mixtures thereof.

The at least one isocyanate is added to the blend for an isocyanate index of between about 30 and about 150, preferably between about 50 and about 120, more preferably between about 60 and about 110. The isocyanate index is the ratio of isocyanate-groups over isocyanate-reactive hydrogen atoms present in a formulation, given as a percentage. Thus, the isocyanate index expresses the percentage of isocyanate actually used in a formulation with respect to the amount of isocyanate theoretically required for reacting with the amount of isocyanate-reactive hydrogen used in a formulation.

For the production of flexible foams, the polyisocyanates may often be the toluene-2,4- and 2,6-diisocyanates or MDI or combinations of TDI/MDI or prepolymers made therefrom.

Isocyanate tipped prepolymer may also be used in the polyurethane formulation. Such prepolymers are obtained by the reaction of an excess of polyol. The polyol may be the conventional petroleum-based polyol or MNO, AMNOP, SNOP, and RONO, and/or a combination of the polyols.

Processing for producing polyurethane products are well known in the art. In general components of the polyurethane-forming reaction mixture may be mixed together in any convenient manner, for example by using any of the mixing equipment described in the prior art for the purpose such as described in "Polyurethane Handbook", by G. Oertel, Hanser publisher.

In general, the polyurethane foam is prepared by mixing the polyisocyanate of and polyol composition in the presence of the blowing agent, catalyst(s) and other optional ingredients as desired under conditions such that the polyisocyanate and polyol blend react to form a polyurethane and/or polyurea polymer while the blowing agent generates a gas that expands the reacting mixture. The foam may be formed by the so-called prepolymer method, in which a stoichiometric excess of the polyisocyanate is first reacted with the high equivalent weight polyol(s) to form a prepolymer, which is in a second step reacted with a chain extender and/or water to form the desired foam. Frothing methods are also suitable. So-called one-shot methods may be preferred. In such one-shot methods, the polyisocyanate and all polyisocyanate-reactive are simultaneously brought together and caused to react. Three widely used one-shot methods which are suitable for use in this invention include slabstock foam processes, high resilience slabstock foam processes, and molded foam methods.

Slabstock foam is conveniently prepared by mixing the foam ingredients and dispensing them into a trough or other region where the reaction mixture reacts, rises freely against the atmosphere (sometimes under a film or other flexible covering) and cures. In common commercial scale slabstock foam production, the foam ingredients (or various mixtures thereof) are pumped independently to a mixing head where they are mixed and dispensed onto a conveyor that is lined with paper or plastic. Foaming and curing occurs on the conveyor to form a foam bun. The resulting foams are typically from about from about 10 kg/m³ to 100 kg/m³, especially from about 15 kg/m³ to 90 kg/m³, preferably from about 17 kg/m³ to 80 kg/m³ in density.

A preferred slabstock foam formulation contains from about 1 to about 6, preferably about 1.5 to about 5 parts by weight water are used per 100 parts by weight high equivalent weight polyol at atmospheric pressure. At reduced pressure these levels are reduced.

High resilience slabstock (HR slabstock) foam is made in methods similar to those used to make conventional slabstock foam but using higher equivalent weight polyols. IIR slabstock foams are characterized in exhibiting a Ball rebound score of 45% or higher, per ASTM 3574.03. Water levels tend to be from about 2 to about 6, especially from about 3 to about 5 parts per 100 parts (high equivalent) by weight of polyols. Visco-elastic foams are those with a Tg (glass transition temperature) close to room temperature. Those have very low resiliency.

In the production of rigid polyurethane foams, the blowing agent includes water, and mixtures of water with a hydrocarbon, or a fully or partially halogenated aliphatic hydrocarbon. The amount of water is may be in the range between about 2 and about 15 parts by weight, preferably between about 2 and about 10 parts by weight based on 100 parts of the polyol. The amount of hydrocarbon, the hydrochlorofluorocarbon, or the hydrofluorocarbon to be combined with the water is suitably selected depending on the desired density of the foam, and may be less than about 40 parts by weight, preferably less than about 30 parts by weight based on 100 parts by weight of the polyol. When water is present as an additional blowing agent, it is may be present in an amount between about 0.5 and 10, preferably between about 0.8 and about 6, preferably between about 1 and about 4, and preferably between about 1 and about 3 parts by total weight of the total polyol composition.

Molded foam can be made according to the invention by transferring the reactants (polyol composition including copolyester, polyisocyanate, blowing agent, and surfactant) to a closed mold where the foaming reaction takes place to produce a shaped foam. Either a so-called "cold-molding" process, in which the mold is not preheated significantly above ambient temperatures, or a "hot-molding" process, in which the mold is heated to drive the cure, can be used. Cold-molding processes are preferred to produce high resilience molded foam. Densities for molded foams generally range from 30 to 80 kg/m³.

### Examples

The following examples are provided to illustrate the embodiments of the invention, but are not intended to limit the scope thereof. All parts and percentages are by weight unless otherwise indicated.

The following materials were used:

| | |
|---|---|
| Maleic Anhydride | >99% purity, available from Aldrich. |
| Soybean oil | Available from Aldrich. |
| High oleic sunflower oil | Available from Aldrich. The sample used in this work had the following composition: linolenic acid rest 4.1%mol, linoleic acid rest 24.4%mol, oleic acid rest 62.8%mol, stearic acid rest 2.7%mol, palmitic acid rest 5.3%mol, C22 saturated acid rest 0.4%mol, C20 saturated acid rest 0.3 %mol. |
| Methyl oleate | 99% purity, available from Aldrich. |
| DMC catalyst | A double metal cyanide which may be prepared using the following materials: |
| | Solution A: ZnCl₂ 114 g (0.836 moles) and H₂O 114 g (6.33 moles) |
| | Solution B: K₃Co(CN)₆ 11.1 g (0.033 moles), H₂O 453 g (25.17 moles) and tert-butanol 58.5 g (0.789 moles, density 0.786 g/ml), stirred 30 minutes at 30°C. |
| | Solution C: 153 g tert-butanol (2.06 moles) and 84 g H₂O (4.67 moles) |
| | Solution D: 214.5 g tert-butanol (2.89 moles) and 1.5 g H₂O (0.083 moles) |
| | Solution B is added to a three-neck, balloon flask equipped with a mechanical agitator. The flask is submersed in a constant temperature bath. Solution A is added to Solution B over a period of 25 minutes (flow of 5 ml/min) using a graduated dropping funnel to allow control of the flow rate. The temperature of the mixture is maintained at 30 ± 4° C. The minimum agitation speed is 200 - 300 RPM. After complete addition of Solution A, the |
| | mixture is agitated for 30 minutes at 30 ± 4° C. The white precipitate is separated from the mixture using a centrifuge with the diameter of 15 - 20 cm. The mixture is centrifuged for 30 minutes at 8,000 RPM. After decantation of the supernatant, the centrifuge cake is dispersed in Solution C using the same equipment for 30 minutes, maintaining an agitation speed of 200 - 300 RPM. After washing, the mixture is centrifuged as before for 30 minutes at 8,000-10,000 RPM. After decantation of the supernatant, the centrifuge cake is dispersed in Solution D using the same equipment for 30 minutes, maintaining an agitation speed of 200 - 300 RPM. After washing, the mixture is centrifuged as before for 30 minutes at 8,000 - 10,000 RPM. After centrifugation, the centrifuge cake is dried for 16 hours at around 20 - 30 mbar at 50° C in a vacuum oven. The catalyst is milled in a mortar to get rid of agglomerates. |
| IRGANOX 1010 | Tetrakis[methylene(3,5-di-t-butyl-4-hydroxyhydro-cinnamate)]methane. An antioxidant available from Ciba Specialty Chemicals. |
| IRGAFOS 168 | Tris(2,4-ditert-butylphenyl)phosphate. An antioxidant available from Ciba Specialty Chemicals. |
| MPG | Monopropylene glycol (1,2-propanediol). 99% purity, available from The Dow Chemical Company. |
| VORANOL* CP 755 | A glycerine propoxylated polyether triol with an average molecular weight of 700 available from The Dow Chemical Company. |
| VORANOL* RN 482 | A sorbitol-initiated oxypropylene polyether polyol, hydroxyl number 482, available from The Dow Chemical Company. |
| VORANOL* CP1055 | A glycerine-initiated oxypropylene polyether polyol of about 1000 molecular weight, available from The Dow Chemical Company. |
| VORANOL* CP1421 | A 5000 molecular weight polyoxypropylene-oxyethylene triol (75 wt% oxyethylene), available from The Dow Chemical Company. |
| VORANOL* CP 6001 | A glycerine-initiated oxypropylene/-oxyethylene polyether polyol, hydroxyl equivalent weight 2000, available from The Dow Chemical Company. |
| VORANOL* RA 640 | An ethylenediamine initiated polyether polyol with a hydroxyl number of 640 available from The Dow Chemical Company. |
| Propylene oxide | 99.9% purity, available from The Dow Chemical Company. |
| 2-Hydroxypropylamine | ≥98% purity, available from Aldrich. |
| Bis(2-hydroxypropyl)amine | ≥98% purity, available from Aldrich. |
| VORANATE* M 229 | A PMDI (polymeric MDI) available from The Dow Chemical Company. |
| VORANATE T-80 | A toluene diisocyanate (80% 2,4-toluene diisocyanate and 20% 2,6-toluene diisocyanate by weight) composition available from The Dow Chemical Company. |
| DEOA | Diethanolamine 99%, available from Aldrich. |
| DABCO TMR-30 | A trimerization catalyst available from Air Products and Chemicals, Inc. |
| DABCO 33 LV | A 33 wt. % solution of triethylenediamine in propylene glycol, available from Air Products and Chemicals, Inc. |
| NIAX A-1 | 70% bis(2dimethyl aminoethyl)ether and 30% dipropylene glycol, available from Momentive Performance Materials. |
| NIAX Silicone L-6988 | An organosilicone copolymer available from Momentive Performance Materials |
| PMDETA | Pentamethyldiethylenetriamine available from Air Products and Chemicals, Inc under the trade designation Polycat 5. |
| BDMA | N,N,N-Benzyl dimethyl amine, ≥99% purity, available from Aldrich |
| Cyclopentane | 99 %, pure available from Haltermann. |
| KOSMOS 29 | A stannous octoate catalyst available from Evonik Industries. |
| CURITHANE* 206 | A urethane catalyst available from The Dow Chemical Company. |
| SPECFLEX* NE 134 | A MDI based prepolymer available from The Dow Chemical Company. |
| TEGOSTAB B 8474 | A silicone-based surfactant available Evonik Industries. |
| TEGOSTAB B 87151LF | A silicone-based surfactant available from Evonik Industries. |
| TEGOSTAB BF-2370 | A Polysiloxane polyoxyalkylene block copolymer for flexible polyurethane slabstock and molded foams available from Evonik Industries. |

| | |
|---|---|
| *CURITHANE, VORANOL, VORANATE, and SPECFLEX are trademarks of the Dow Chemical Company. | |

The samples were tested according to the following methods:

| | |
|---|---|
| Hydroxyl Number | Measured as potassium hydroxide mg/g according to ASTM D4274 D. |
| Water % wt | Measured according to ASTM E203. |
| Viscosity at 25°C and 40°C | Measured according to ASTM D445 and ConePlate: ISO 3219. |
| Total Unsaturation | Measured as meq/g according to ASTM D4671. |
| Acid Number | Measured as potassium hydroxide mg/g according and determined by potentiometric titration of a methanolic solution of the sample with standard methanolic potassium hydroxide solution (0.01 N: certified, available from Fisher Scientific) |
| pH (1 H₂O+10 MeOH) | Apparent pH, measured using a standard pH meter after addition of 10 g of sample to 60 mL of a neutralized water-methanol (1+10 water+methanol by weight) solution. |
| Molecular Weight Distribution | The Molecular Weight Distribution (MWD) of the samples is determined by means of room temperature gel permeation chromatography (GPC). The GPC system is calibrated against a standard polyol mixture of VORANOL* CP6001 + VORANOL CP4100 + |
| | VORANOL CP2000 + VORANOL CP1000 (triol glycerine based polypropylene polyols having Mn=6000, 4100, 2000, and 1000 Da) and/or a mixture of narrow polystyrene standards. Calculation is based on the narrow standard method. |
| | The calculated molecular weights are only an indication of the real molecular weights because an accurate determination can only be carried out if the GPC system is calibrated with certified standards from the same type as the sample. Typical values for the relative precision of the calculated molecular weight averages are Mn ± 8.8% and Mw ± 5.7% at the 95% Confidence Level. |
| | About 35 mg of sample is dissolved in 25 mL THF (min. 2 hrs). 100 µL of the dilute solution is injected into a GPC triple detection system with 3 Polymer Laboratories PLgel MIXED-B, 300 x 7.5 mm columns at a flow rate of 1 ml/min and with an oven temperature at 35°C. |

### Example 1

### Modification of soybean oil with maleic anhydride, 1: 4 molar ratio.

Soybean oil (549 g) and maleic anhydride (250 g) are placed into a 1 liter thick wall Pyrex glass reactor, and nitrogen gas is purged through the reaction mixture to remove oxygen from the system. Toluene (2 g, 0.25% wt.) is added to suppress sublimation of maleic anhydride and the temperature is raised to 180°C with stirring and nitrogen padding. The reaction mixture is held at this temperature for 1 hour, then at 200°C for 5 hours. According to ¹H-NMR, about 1 % of the maleic anhydride remains unreacted in the product. The resulting maleated soybean oil is a highly viscous brown oil.

The intemiediate has the following properties: GPC: Mn=1079 g/mol, Mw=1844 g/mol, Mw/Mn=1.71 (polystyrene standard).

### Ring-opening of anhydride functions with MPG

MPG (36 g) is added to maleated soybean oil (150 g, prepared as described in Example 1), at 70°C under N₂-padding in a 1 liter glass bottle. The reaction mixture is held in a tightly closed bottle in an oven at 70°C for 24 hours with occasional shaking; resulting in a highly viscous reddish oil. The resulting maleated and ring opened oil has the following properties: OH value: 188 mg KOH/g; Acid value: 137 mg KOH/g; Viscosity at 25°C: 550000 mPa.s.

### Propoxylation with DMC catalyst

Solid DMC catalyst (0.094 g, 200 weight ppm based on end-batch polyol is dispersed in toluene (53 g) using a IKA Ultra Turrax T25 blender at 11000 rpm for 5 minutes. The dispersion is then mixed with maleated and ring opened soybean oil polyol (123 g), obtained as described above, in a 6 liter laboratory stainless steel alkoxylation reactor. Reaction mixture is flushed 5 times with nitrogen at 3.5 bar while stirring at 500 rpm. Vacuum is applied for 5 minutes to the reactor at ambient temperature to reduce the pressure in the alkoxylation reactor to 0.1 bar. 70 g of propylene oxide is then added at 120°C to monocap acid groups. After 30 hours there is sudden drop in pressure, indicating that acid groups are PO capped. The reactor is then heated to 160°C and another 268 g of propylene oxide is fed to the reactor at 500 rpm over a period of 50 min at feed rate of 300 g/hour. Additional 0.5 hour digestion time is allowed upon the end of the feed. Brown moderately viscous hydrophobic liquid is obtained. Toluene is removed on rotary evaporator. The end product has the following properties: OH value: 64.7 mg KOH/g; Acid value: 1.0 mg KOH/g; Total unsaturation: 0.262 meq/g; Water: 720 ppm; Viscosity at 25°C.: 2640 mPa.s; GPC: Mn=2399 g/mol, Mw=30770 g/mol, Mw/Mn=12.83 (polyol standard).

### Example 2:

### Ring-opening of anhydride functions with water

Water (22 g) is added to maleated soybean oil (385 g, prepared as described in Example 1) at 70°C under N₂-padding in a 1 liter glass bottle. Reaction mixture initially becomes very viscous, some foaming occurs. The reaction mixture is held in a tightly closed bottle in an oven at 70°C with occasional shaking for 48 hours. The resulting maleated and ring oil has the following properties: OH value: 13.1 mg KOH/g; Acid value: 337 mg KOH/g; Viscosity at 40°C: 200000 mPas.

### Propoxylation with DMC catalyst

Solid DMC catalyst (0.214 g, 200 weight ppm based on end-batch polyol) is dispersed in toluene (156 g) using a IKA Ultra Turrax T25 blender at 11000 rpm for 5 minutes. The dispersion is then mixed with maleated and ring opened soybean oil polyol (360 g), obtained as described above, in a 6 liter laboratory stainless steel alkoxylation reactor. Reaction mixture is flushed 5 times with nitrogen at 3.5 bar while stirring at 500 rpm. Vacuum is applied for 5 minutes to the reactor at ambient temperature to reduce the pressure in the alkoxylation reactor to 0.1 bar. 140 g of propylene oxide added at 120°C in 4 portions within 7 hours to monocap acid groups. After about 24 hours there is sudden drop in pressure, indicating that acid groups are PO capped. The reactor is then heated to 160°C and another 570 g of propylene oxide is fed to the reactor at 500 rpm over a period of 40 min at feed rate of 900 g/hour. Additional 0.5 hour digestion time is allowed upon the end of the feed. Brown moderately viscous hydrophobic liquid is obtained. Toluene is removed on rotary evaporator. The end product has the following properties: OH value: 108 mg KOH/g; Acid value: 0.26 mg KOH/g; Total unsaturation: 0.404 meq/g; Water: 210 ppm; Viscosity at 25°C.: 1540 mPa.s; GPC: Mn=1051 g/mol, Mw=21680 g/mol, Mw/Mn=20.63 (polyol standard). GPC: Mn=2417 g/mol, Mw=7565 g/mol, Mw/Mn=3.13 (polystyrene standard).

### Example 3

### Modification of soybean oil with maleic anhydride, 1: 3 molar ratio

Soybean oil (600 g) and maleic anhydride (203 g) are placed into a 1 liter thick wall Pyrex glass reactor, and nitrogen gas is purged through the reaction mixture to remove oxygen from the system. Toluene (2 g, 0.25% wt.) is added to suppress sublimation of maleic anhydride and the temperature is raised to 180°C with stirring and nitrogen padding. The reaction mixture is held at this temperature for 1 hour, then at 200°C for 5 hours. About 1 % of unreacted maleic anhydride remains in the product from total amount of the anhydride taken for the reaction, according to ¹H-NMR. The resulting maleated soybean oil is a highly viscous brown oil. The intermediate has the following properties: GPC: Mn=989 g/mol, Mw=2927 g/mol, Mw/Mn=2.96 (polyol standard).

### Ring-opening of anhydride functions with MPG

MPG (39 g) is added to maleated soybean oil (200 g, prepared as described in Example 3), at 70°C under N₂-padding in a 1 liter glass bottle. The reaction mixture is held in a tightly closed bottle in an oven at 70°C for 24 hours with occasional shaking, resulting in a highly viscous reddish oil. The resulting maleated and ring oil has the following properties: OH value: 158 mg mg KOH/g; Acid value: 113 mg KOH/g; Viscosity at 25°C: 245000 mPa.s.

### Propoxylation with DMC catalyst

VORANOL* CP755 is filtered through magnesium silicate in order to remove traces of KOH. Solid DMC catalyst (0.282 g, 400 weight ppm based on end-batch polyol) is dispersed in VORANOL* CP 755 (218 g) using a IKA Ultra Turrax T25 blender at 11000 rpm for 5 minutes. The dispersion is then mixed with maleated and ring opened soybean oil polyol (218 g), obtained as described above, in a 6 liter laboratory stainless steel alkoxylation reactor. Reaction mixture is flushed 5 times with nitrogen at 3.5 bar while stirring at 500 rpm. Vacuum is applied for 5 minutes to the reactor at ambient temperature to reduce the pressure in the alkoxylation reactor to 0.1 bar. 80 g of propylene oxide added at 120°C to monocap acid groups. After about 25.5 hours there is a sudden drop in pressure, indicating that acid groups are PO capped. The reactor is then heated to 160°C and another 190 g of propylene oxide is fed to the reactor at 500 rpm over a period of 40 min at feed rate of 300 g/hour. Additional 0.5 hour digestion time is allowed upon the end of the feed. Brown moderately viscous hydrophobic liquid is obtained. The end product has the following properties: OH value: 127 mg KOH/g; Acid value: 0.15 mg KOH/g; Total unsaturation: 0.329 meq/g; Water: 880 ppm; Viscosity at 25°C.: 1020 mPa.s; GPC: Mn=1433 g/mol, Mw=3079 g/mol, Mw/Mn=2.15 (polyol standard).

### Example 4

### Ring-opening of anhydride junctions with water

Water (27.8 g) is added to maleated soybean.oil (600 g, prepared as described in Example 3) at 70°C under N₂-padding in a 1 liter glass bottle. Reaction mixture initially becomes very viscous, some foaming occurs. The reaction mixture is then held in a tightly closed bottle in an oven at 70°C for 48 hours with occasional shaking. The resulting maleated and ring oil has the following properties: OH value: 22 mg KOH/g; Acid value: 231 mg KOH/g; Viscosity at 40°C: 180000 mPa.s.

### Propoxylation with DMC catalyst

Solid DMC catalyst (1.587 g, 2040 weight ppm based on end-batch polyol) is dispersed in toluene (617 g) using a IKA Ultra Turrax T25 blender at 11000 rpm for 5 minutes. The dispersion is then mixed with maleated and ring opened soybean oil polyol (617 g), obtained as described above, in a 6 liter laboratory stainless steel alkoxylation reactor. Reaction mixture is flushed 5 times with nitrogen at 3.5 bar while stirring at 500 rpm. Vacuum is applied for 5 minutes to the reactor at ambient temperature to reduce the pressure in the alkoxylation reactor to 0.1 bar. 200 g of propylene oxide added at 120°C in 4 portions within 7 hours to monocap acid groups. After about 30 hours there is sudden drop in pressure, indicating that acid groups are PO capped. The reactor is then heated to 160°C and another 238 g of propylene oxide is fed to the reactor at 500 rpm over a period of 50 min at feed rate of 300 g/hour. Additional 0.5 hour digestion time is allowed upon the end of the feed. Brown moderately viscous hydrophobic liquid is obtained. Toluene is removed on rotary evaporator. The end product has the following properties: OH value: 174 mg KOH/g: Acid value: 6.53 mg KOH/g; Total unsaturation: 0.823 meq/g; Water: 2690 ppm.

### Example 5

### Modification of Nexera canola oil with maleic anhydride, 1: 3.18 molar ratio

NEXERA canola oil (Dow, 770 g) and maleic anhydride (277 g) are placed into a 1 liter thick wall Pyrex glass reactor, and nitrogen gas is purged through the reaction mixture to remove oxygen from the system. Toluene (2.6 g, 0.25% wt.) is added to suppress sublimation of maleic anhydride and the temperature is raised to 180°C with stirring and nitrogen padding. The reaction mixture is held at this temperature for 1 hour, then at 200°C for 5 hours. About 1 % of unreacted maleic anhydride remains in the product from total amount of the anhydride taken for the reaction, according to ¹H-NMR. The resulting maleated Nexera canola oil is a highly viscous brown oil. The intermediate has the following properties: GPC: Mn=1471 g/mol, Mw=2571 g/mol, Mw/Mn=2.96 (polystyrene standard).

### Ring-opening of anhydride functions with MPG

MPG (74.9 g) is added to maleated Nexera canola oil (377 g, prepared as described above), at 70°C under N₂-padding in a 1 liter glass bottle. The reaction mixture is held in a tightly closed bottle in an oven at 70°C for 24 hours with occasional shaking, resulting in a moderately viscous reddish oil. The resulting maleated and ring oil has the following properties: OH value: 182 mg KOH/g; Acid value: 100 mg KOH/g; Viscosity at 25°C: 22100 mPa.s.

### Propoxylation with DMC catalyst

Solid DMC catalyst (0.636 g, 1300 weight ppm based on end-batch polyol is dispersed in maleated and ring opened Nexera canola oil (374 g, obtained as described above) using a IKA Ultra Turrax T25 blender at 11000 rpm for 5 minutes in a 6 liter laboratory stainless steel alkoxylation reactor. Reaction mixture is flushed 5 times with nitrogen at 3.5 bar while stirring at 500 rpm. Vacuum is applied for 5 minutes to the reactor at ambient temperature to reduce the pressure in the alkoxylation reactor to 0.1 bar. 70 g of propylene oxide added at 120°C to monocap acid groups. After about 21 hours there is sudden drop in pressure, indicating that acid groups are PO capped. The reactor is then heated to 160°C and another 47 g of propylene oxide is fed to the reactor at 500 rpm over a period of 10 min at feed rate of 300 g/hour. Additional 2 hour digestion time is allowed upon the end of the feed. Brown moderately viscous hydrophobic liquid is obtained. The end product has the following properties: OH value: 185 mg KOH/g; Acid value: 0.067 mg KOH/g; Water: 340 ppm; Viscosity at 25°C.: 5190 mPa.s; GPC: Mn=1429 g/mol, Mw=20470 g/mol, Mw/Mn=14.32 (polyol standard).

### Compatibility of Example 5 with hydrocarbon blowing agent

A 50 ml glass flask with a plastic cap is filled with 30 grams of the maleated and propoxylated oil of example 5 and 15 grams of cyclopentane. Using a cross magnetic stirrer the blend is mixed at 600 RPM for one hour at room temperature. Then the solution is observed to be clear and homogeneous. After 40 hours the blend is still one phase. This confirms a good compatibility of maleated and propoxylated oil with hydrocarbons.

### Example 6

### Modification of linseed oil with maleic anhydride, 1: 5.5 molar ratio.

Linseed oil (99.5%, Aldrich, 452 g), maleic anhydride (278 g), and antioxidants Irganox 1010 (1.8 g, 0.25% wt:) and Irgafos 168 (1.8 g, 0.25% wt.) are placed into a 1 liter thick wall Pyrex glass reactor, and nitrogen gas is purged through the reaction mixture to remove oxygen from the system. Toluene (1.8 g, 0.25% wt.) is added to suppress sublimation of maleic anhydride and the temperature is raised to 180°C with stirring and nitrogen padding. The reaction mixture is held at this temperature for 1 hour, then at 200°C for 5 hours. About 1 % of unreacted maleic anhydride remains in the product from total amount of the anhydride taken for the reaction, according to ¹H-NMR. The resulting maleated Linseed oil is a highly viscous brown oil. The intermediate has the following properties: GPC: Mn=1064 g/mol, Mw=2643 g/mol, Mw/Mn=2.48 (polystyrene standard). Toluene (314 g, 30% wt.) is added at 70°C to lower the viscosity of the material.

### Ring-opening of anhydride functions with MPG

MPG (208 g) is added to the reactor from while stirring at 70°C under N₂-padding. The reaction mixture is held at 70°C for 6 hours, resulting in a moderately viscous brown oil. The resulting maleated and ring oil (70% wt. mixture with toluene) has the following properties: OH value: 176 mg KOH/g; Acid value: 108 mg KOH/g; Viscosity at 25°C: 35700 mPa.s.

### Propoxylation with DMC catalyst

Solid DMC catalyst (1.47 g, 2140 weight ppm based on end-batch polyol is dispersed in maleated and ring opened linseed oil (537 g, obtained as described above and containing 25% wt. toluene) using a IKA Ultra Turrax T25 blender at 11000 rpm for 5 minutes in a 6 liter laboratory stainless steel alkoxylation reactor. Reaction mixture is flushed 5 times with nitrogen at 3.5 bar while stirring at 500 rpm. Vacuum is applied for 5 minutes to the reactor at ambient temperature to reduce the pressure in the alkoxylation reactor to 0.1 bar. 70 g of propylene oxide added at 120°C to monocap acid groups. After about 23 hours there is a sudden drop in pressure, indicating that acid groups are PO capped. The reactor is then heated to 160°C and another 212 g of propylene oxide is fed to the reactor at 500 rpm over a period of 40 min at feed rate of 300 g/hour. Additional 0.5 hour digestion time is allowed upon the end of the feed. Brown moderately viscous hydrophobic liquid is obtained. Toluene is removed on rotary evaporator. The end product has the following properties: OH value: 168 mg KOH/g; Acid value: 3.7 mg KOH/g; Water: 440 ppm; Viscosity at 25°C.: 41300 mPa.s; GPC: Mn=1883 g/mol, Mw=89750 g/mol, Mw/Mn=47 (polyol standard).

### Comparative Example 1 and Example 7

The maleated and propoxylated Nexera canola oil of Example 5 is used in a rigid foam formulation (Example 7) as given in Table 1. Both foams, Comparative Example 1 and Example 7, are produced on the bench, using standard hand-mix procedures. Polyol, water, catalysts, and surfactant premix (for a total weight of 100 grams) is blended at 2,000 RPM. Then, a slight excess of the needed cyclopentane is added to the polyol blend and stirred at 2,000 RPM until it is dissolved into the polyol blend. The blend is weighed and either additional cyclopentane is added to compensate for the loss by evaporation, or more mixing is provided to lose excess cyclopentane until the right weight of 13 grams of added cyclopentane is obtained. Then Voranate M 229 is added and mixed at 2,500 RPM for 5 seconds. The reactants are poured in a 20 x20x 20 cardboard box maintained in a metallic frame. Reactivity is recorded and foam properties measured after 2 days of curing. K-factor is measured on a 20 x 2.5 x 2.5 cm sample using a Laser Comp Fox 200 device. Table 1 shows the composition of the foam formulations and the properties of the resulting foams:

**Table 1**

| | **Comparative Example 1** | **Example 7** |
|---|---|---|
| Voranol RN 482 | 64.1 | 64.1 |
| Resulting Polyol of Example 5 | 0.0 | 25.0 |
| CP1055 | 25.0 | 0.0 |
| Voranol RA 640 | 5.0 | 5.0 |
| water | 2.3 | 2.3 |
| Tegostab B 8474 | 1.5 | 1.5 |
| Dabco TMR-30 | 0.7 | 0.7 |
| PMDETA (Polycat 5) | 1.4 | 1.4 |
| | 100.0 | 100.0 |
| cyclopentane | 13.0 | 13.0 |
| Voranate M 229 | 144.0 | 144.0 |
| Index | 115.00 | 113.00 |
| | | |
| Cream Time (sec) | 9 | 9 |
| Gel time (sec) | 55 | 51 |
| Tack free time (sec) | 99 | 125 |
| Free rise density(kg/m3) | 24.51 | 25.3 |
| Comp.Str. perpendicular (kPa) | 50.53 | 46.22 |
| Comp.Str. parallel (kPa) | 153.49 | 157.76 |
| K-fac 10°C Laser-core | 23.28 | 23.13 |
| K-fac 24°C Laser-core | 25.18 | 24.97 |

These data show that foam reactivity, cell structure, density, compressive strength and K factors are comparable to the control foam. Hence, the maleated and propoxylated oil can be used to produce good thermal insulation foams.

### Comparative Example 2 and Examples 8-10

The maleated and propoxylated oils of Examples 2, 5 and 6 are used in flexible foam formulations given in Table 2. These foams were made by preblending polyols, surfactants, crosslinkers, catalysts and water. Then the isocyanate was added under stirring at 2,000 RPM. After mixing for 5 seconds the reactants were poured in a 30x30x10 cm aluminium mold heated at 60°C which is subsequently closed. The mold has previously been sprayed with a release agent Klueber 41-2038 available from Chemtrend. After 5 minutes curing the lid is open, foam pad is demolded and immediately crushed manually. Foam properties are measured after 3 days aging in a conditioned laboratory according to ASTM 3574-95 test methods for density, airflow, resiliency and compression sets, according to Peugeot D-41-1003-86 test method for CFD's (Compression Force Deflection), and according to ISO 1798-97 for Tensile and Elongation values. Table 2 shows the composition of the foam formulations and the properties of the resulting foams:

**Table 2**

| | Comparative Example 2 | Example 8 | Example 9 | Example 10 |
|---|---|---|---|---|
| Voranol CP 6001 | 100 | 90 | 90 | 90 |
| Example 2 | | | 10 | |
| Example 5 | | 10 | | |
| Example 6 | | | | 10 |
| Water | 3.5 | 3.5 | 3.5 | 3.5 |
| DEOA 99 % | 0.5 | 0.5 | 0.5 | 0.5 |
| Dabco 33 LV | 0.4 | 0.4 | 0.4 | 0.4 |
| Niax A-1 | 0.05 | 0.05 | 0.05 | 0.05 |
| Tegostab B-8715LF | 1.5 | 1.5 | 1.5 | 1.5 |
| Voranol CP 1421 | 2.0 | 2.0 | 2.0 | 2.0 |
| Specflex NE 134 index | 90 | 95 | 95 | 95 |
| | | | | |
| Mold exit time (s) | 71 | 93 | 85 | 90 |
| Demolding time (mi) | 5 | 5 | 5 | 5 |
| Part weight (g) | 427 | 431 | 450 | 427 |
| Comments | Good Cell structure | Good Cell structure | Good Cell structure | Sponge Cell structure |
| | | | | |
| Core density | 48.7 | 45.9 | 49.1 | |
| 50 % CFD (KPa) | 5.2 | 7.4 | 7.3 | |
| Airflow (cfm) | 2.0 | 2.3 | 2.5 | |
| Resiliency (%) | 52 | 48 | 53 | |
| 50 % CS (% CD) | 10.9 | 9.4 | 8.4 | |
| 75 % CS (%CD) | 9.1 | 8.4 | 6.9 | |
| Tensile Strength (KPa) | NA | 115 | 93 | |
| Elongation (%) | NA | 95 | 102 | |

As seen in Table 2, the AMNOP's of soy oil (Example 9) and canola oil (Example 8) are good cross linker polyols for molded flexible foams. Indeed higher foam load bearing was measured with foams containing the AMNOP's at equivalent airflow values. Cell structure is identical to the control foam, while resiliency, compression sets and elongation/tensile properties are good and indicate the natural oil polyol has no detrimental effect on foam characteristics. The sponge like cell structure of Example 10 may be due to the level of acid and/or toluene in the polyol blend as well as a highly crosslinked high molecular weight polyol fraction in the AMNOP of example 6.

### Example 11

### Modification of high oleic sunflower oil with maleic anhydride, 1: 3 molar ratio.

Sunflower oil (12762.0 g, 14.48 mol) and maleic anhydride (3251.0 g, 43.76 mol) were placed into a 20 liter stainless steel autoclave reactor, and nitrogen gas was purged through the reaction mixture to remove oxygen from the system. The temperature was raised to 220°C with stirring and nitrogen padding. The reaction mixture was held at this temperature for 5 hours. According to ¹H-NMR, about 1 % of the maleic anhydride remained unreacted in the product. The resulting trimaleated sunflower oil is a viscous dark-yellow oil. Viscosity at 25°C: 36250 mPa.s; Viscosity at 50°C: 3300 mPa.s; Viscosity at 100°C: 175 mPa.s; GPC: Mn=1236 g/mol, Mw/Mn=1.32 (polyol standard).

### Ring-opening of anhydride functions with MPG.

MPG (1741.0 g, 22.88 mol) was added to the trimaleated sunflower oil (8963.0 g, 7.63 mol) prepared as described in Example 11, at 70°C under N₂-padding in a 20 liter stainless steel autoclave reactor. The reaction mixture was stirred for 4 hours, resulting in a viscous dark-yellow oil. The resulting six-functional aliphatic half acid ester has the following properties: OH value: 142 mg KOH/g; Acid value: 110.5 mg KOH/g; Viscosity at 25°C: 333500 mPa.s; Viscosity at 50°C: 32400 mPa.s; Viscosity at 75°C: 3770 mPa.s; Viscosity at 100°C: 887 mPa.s; Total unsaturation: 1.455 meq/g; Water: 670 ppm; pH: 3.2. GPC: Mn=1573 g/mol, Mw/Mn=1.87 (polyol standard).

### Reaction of anhydride functions with 2-hydroxypropylamine.

2-Hydroxypropylamine (34.73 g, 0.462 mol) was added dropwise with stirring to a solution of trimaleated sunflower oil (181.13 g, 0.154 mol), prepared as described in Example 11, in toluene (200 g) at room temperature under N₂-padding in a 750 ml three-necked, round-bottomed flask, equipped with a dropping funnel, a nitrogen gas-inlet, a pressure release valve, a Dean-Stark trap attached to a reflux condenser through which water is circulated, a magnetic stirrer, a heating mantle, a thermocouple and a temperature control unit. Temperature rose to 47°C, sticky oil separated from the solution. The reaction mixture was refluxed for 6 hours at 115-120°C. 90% of theoretical amount of water were collected. Toluene was removed in vacuum. A viscous brown oil was obtained. The resulting three-functional aliphatic succinimide-based polyol has the following properties: OH value: 124 mg KOH/g; Acid value: 18.2 mg KOH/g; Amine value: 8 mg KOH/g; Viscosity at 50°C: 9169 mPa.s; Viscosity at 75°C: 1357 mPa.s; Viscosity at 100°C: 276 mPa.s; Total unsaturation: 1.66 meq/g; Water: 1110 ppm; pH: 6.3; Density at 60°C: 1.016 g/cm³; GPC: Mn=1197 g/mol, Mw/Mn=1.40 (polyol standard).

### Example 12

### Modification of methyl oleate with maleic anhydride, 1: 1 molar ratio

Methyl oleate (25.00 g, 0.084 mol) and maleic anhydride (8.25 g, 0.084 mol) are placed into a 250 ml thick wall Pyrex glass reactor, and nitrogen gas is purged through the reaction mixture to remove oxygen from the system. The temperature is raised to 180°C with stirring and nitrogen padding. The reaction mixture is held at this temperature for 1 hour, then at 230°C for 5 hours. About 5 % of unreacted maleic anhydride remains in the product from total amount of the anhydride taken for the reaction, according to ¹H-NMR. The resulting monomaleated methyl oleate is a yellow oil.

### Reaction of anhydride functions with 2-hydroxypropylamine.

2-Hydroxypropylamine (0.86 g, 0.011 mol) was added dropwise to a monomaleated methyl oleate (4.52 g, 0.011 mol), prepared as described in the Example 12, at room temperature in a glass vial. Temperature rose significantly. The vial was closed, shaken and stored for twelve hours in an oven at 85°C. A viscous yellow oil was obtained. According to MALDI-ToF spectrum, the main peak at 458.2468 Da corresponds to the resulting aliphatic succinimide-based monol Me-Oleate+Maleic Anhydride+2-Hydroxypropylamine-H₂O+Li⁺. The small peak at 476.2493 Da corresponds to non-ring closed non-dehydrated half acid amide Me-Oleate+Maleic Anhydride+2-Hydroxypropylamine+Li⁺.

### Reaction of anhydride functions with bis(2-hydroxypropyl)amine.

Bis(2-hydroxypropyl)amine (1.51 g, 0.011 mol) was added dropwise to a monomaleated methyl oleate (4.52 g, 0.011 mol), prepared as described in the Example 12, at room temperature in a glass vial. Temperature rose significantly. The vial was closed, shaken and stored for twelve hours in an oven at 85°C. A viscous yellow oil was obtained. According to MALDI-ToF spectrum, the main peak at 528.3895 Da corresponds to the resulting aliphatic half acid amide Me-Oleate+Maleic Anhydride+bis(2-hydroxypropyl)amine+Li⁺.

### Example 13

Foam was produced using trimaleated sunflower oil of example 11 as given in Table 3:

**Table 3**

| | Example 13 |
|---|---|
| Trimaleated sunflower Oil from Example 11 | 5 |
| VORANATE M229 | 15 |
| Water | 0.5 |
| Kosmos 29 | 0.5 |
| BDMA | 0.5 |

A fast foaming occurred immediately upon mixing the components of Table 2. A friable, reddish foam is obtained.

### Examples 14-17

Foams were produced using the MPG ring-opened trimaleated sunflower oil of Example 11 as given in Table 4:

**Table 4:**

| | Example 14 | Example 15 | Example 16 | Example 17 |
|---|---|---|---|---|
| MPG ring-opened polyester polyol from Example 11 | 100 | 100 | 100 | 100 |
| NIAX L-6988 | | 1 | 1 | 1 |
| Curithane 206 | 3 | 3 | 3 | 3 |
| Cyclopentane | | | 15 | 15 |
| BDMA | 1 | 1 | 1 | 1 |
| water | | 0.5 | | 0.5 |
| Total Parts | 104 | 105.5 | 120 | 120.5 |
| Water Content Of The Blend | 0 | 0.47 | 0 | 0.41 |
| OH # of the Polyol Blend | 136.54 | 134.6 | 118.33 | 117.84 |
| VORANATE M-229 | 1 | 1 | 1 | 1 |
| INDEX | 160 | 160 | 160 | 160 |
| Voranate M-229 g per 100 g. Polyol Blend | 52.77 | 63.44 | 45.73 | 55.54 |
| Ratio: Polyol/Isocyanate | 1.9 | 1.58 | 2.19 | 1.8 |
| Foam Density (g/L) | 150 | 100 | 70 | 50 |

Example 14 resulted in a dense foam confirming that carboxylic groups are reacting with isocyanate as carbon dioxide is generated and to expand the foam. Example 15 shows that with the addition of water a stiff foam is produced. Use of cyclopentane in Example 16 results in a high foam bun which shrinks upon cooling. However, by combining water and cyclopentane in the formula the shrinking can be overcome (Example 17)

### Example 18

A free rise flexible foam was made using the MPG ring-opened maleated soy oil of Example 1 as given in Table 5:

**Table 5:**

| | |
|---|---|
| VORANOL 3322 | 95 |
| MPG ring-opened polyester polyol from Example 1 | 5 |
| Water | 4.5 |
| NIAX A-1 | 0.05 |
| DABCO 33LV | 0.15 |
| BDMA | 0.5 |
| KOSMOS 29 | 0.18 |
| TEGOSTAB B 2370 | 1.0 |
| VORANATE T-80 | 57.1 |
| | |
| Cream time (s) | 10 |
| Rise time (s) | About 3 minutes |
| Core density (kg/m3) | 27 |

The foam containing was slow to gel but was stable, hence it was put in an oven at 140°C to cure.

## Claims

1. A method for producing a polyol, comprising:
providing at least one natural oil or fat comprising at least one ene moiety;
reacting the at least one natural oil or fat with at least one of an enophile or enophile/dienophile mixture in absence of a double bond isomerization catalyst to form at least one modified natural oil;
reacting the at least one modified natural oil with at least one alkylene oxide in the presence of at least one double metal cyanide catalyst to form at least one alkoxylated modified natural oil polyol.

2. The method of claim 1, further comprising:
after forming the at least one modified natural oil, and before reacting the at least modified natural oil with at least one alkylene oxide, reacting the at least one modified natural oil with at least one ring opener to form at least one ring opened modified natural oil

3. An alkoxylated modified natural oil polyol comprising a reaction product of at least one alkylene oxide and at least one modified natural oil, wherein:
the at least one alkylene oxide and the at least one modified natural oil are reacted in the presence of a double metal cyanide catalyst;
the at least one modified natural oil comprises a reaction product of at least one natural oil or fat and at least one of an enophile or enophile/dienophile mixture in absence of a double bond isomerization catalyst, and wherein the at least one natural oil or fat comprises at least one ene moiety.

4. An alkoxylated modified natural oil polyol of claim 3, wherein:
the at least are modified natural oil is a ring opened modified natural oil, wherein the at least one ring opened modified natural oil comprises a reaction product of at least one ring opener and the reaction product of at least one natural oil or fat and at least one of an enophile or enophile/dienophile mixture in absence of a double bond isomerization catalyst, and wherein the at least one natural oil or fat comprises at least one ene moiety.

5. A polyurethane, comprising:
a reaction product of:
at least one isocyanate; and
a polyol blend comprising at least one alkoxylated modified natural oil polyol according to claim 3 or claim 4.

6. A method for producing a polyurethane, comprising:
undertaking the method of Claim 1 or Claim 2 to produce a polyol formulation; and
reacting the polyol formulation with at least one isocyanate to form a polyurethane.

7. The method, polyol, or polyurethane of any one of claims 1-6, wherein the reacting the at least one natural oil or fat with at least one of an enophile or enophile/dienophile mixture is performed in absence of iodine.

8. The method, polyol, or polyurethane of any one of claims 1-7, wherein the enophile or enophile/dienophile mixture comprises at least one of maleic anhydride, fumaric acid, maleic acid, itaconic anhydride, citraconic anhydride, acrylic acid or maleic acid half esters.

9. The method, polyol, or polyurethane of any one of claims 1-8, wherein the enophile or enophile/dienophile mixture comprises maleic anhydride.

10. The method, polyol, or polyurethane of any one of claims 2, 4, 5 and 6, wherein the ring opener comprises at least one of water or monopropylene glycol.

11. The method, polyol, or polyurethane of any one of claims 1 to 10, wherein the alkoxylated modified natural oil polyol has a functionality between 4 and 6.

12. The method, polyol, or polyurethane of any one of claims 1 to 11, wherein at least one of the modified natural oil and the ring opened natural oil is a Newtonian liquid.

13. A foam comprising the polyurethane of any one of claims 5, 7 and 8.

14. An elastomer comprising the polyurethane of any one of claims 5, 7 and 8.

15. A coating comprising the polyurethane of any one of claims 5, 7 and 8.

## Patentansprüche

1. Ein Verfahren zum Herstellen eines Polyols, das Folgendes beinhaltet:
Bereitstellen von mindestens einem natürlichen Öl oder Fett, das mindestens einen En-Rest beinhaltet;
Reagierenlassen des mindestens einen natürlichen Öls oder Fetts mit mindestens einer von einer Enophil- oder Enophil-/Dienophilmischung in Abwesenheit eines Isomerisationskatalysators mit Doppelbindung, um mindestens ein modifiziertes natürliches Öl zu bilden;
Reagierenlassen des mindestens einen modifizierten natürlichen Öls mit mindestens einem Alkylenoxid in Anwesenheit mindestens eines Doppelmetallcyanidkatalysators, um mindestens ein alkoxyliertes modifiziertes Polyol aus natürlichem Öl zu bilden.

2. Verfahren gemäß Anspruch 1, das ferner Folgendes beinhaltet:
nach dem Bilden des mindestens einen modifizierten natürlichen Öls und vor dem Reagierenlassen des mindestens einen modifizierten natürlichen Öls mit mindestens einem Alkylenoxid Reagierenlassen des mindestens einen modifizierten natürlichen Öls mit mindestens einem Ringöffner, um mindestens ein ringgeöffnetes modifiziertes natürliches Öl zu bilden.

3. Ein alkoxyliertes modifiziertes Polyol aus natürlichem Öl, das ein Reaktionsprodukt von mindestens einem Alkylenoxid und mindestens einem modifizierten natürlichen Öl beinhaltet, wobei:
das mindestens eine Alkylenoxid und das mindestens eine modifizierte natürliche Öl in Anwesenheit eines Doppelmetallcyanidkatalysators reagiert werden;
das mindestens eine modifizierte natürliche Öl ein Reaktionsprodukt aus mindestens einem natürlichen Öl oder Fett und mindestens einer aus einer Enophil- oder Enophil-/Dienophilmischung in Abwesenheit eines Isomerisationskatalysators mit Doppelbindung beinhaltet, und wobei das mindestens eine natürliche Öl oder Fett mindestens einen En-Rest beinhaltet.

4. Alkoxyliertes modifiziertes Polyol aus natürlichem Öl gemäß Anspruch 3, wobei:
das mindestens eine modifizierte natürliche Öl ein ringgeöffnetes modifiziertes natürliches Öl ist, wobei das mindestens eine ringgeöffnete modifizierte natürliche Öl ein Reaktionsprodukt aus mindestens einem Ringöffner und das Reaktionsprodukt aus mindestens einem natürlichen Öl oder Fett und mindestens einer aus einer Enophil-oder Enophil-/Dienophilmischung in Abwesenheit eines Isomerisationskatalysators mit Doppelbindung beinhaltet, und wobei das mindestens eine natürliche Öl oder Fett mindestens einen En-Rest beinhaltet.

5. Ein Polyurethan, das Folgendes beinhaltet:
ein Reaktionsprodukt aus:
mindestens einem Isocyanat; und
einer Polyolmischung, die mindestens ein alkoxyliertes modifiziertes Polyol aus natürlichem Öl gemäß Anspruch 3 oder Anspruch 4 beinhaltet.

6. Ein Verfahren zum Herstellen eines Polyurethans, das Folgendes beinhaltet:
Ausführen des Verfahrens gemäß Anspruch 1 oder Anspruch 2, um eine Polyolformulierung herzustellen; und
Reagierenlassen der Polyolformulierung mit mindestens einem Isocyanat, um ein Polyurethan zu bilden.

7. Verfahren, Polyol oder Polyurethan gemäß einem der Ansprüche 1-6, wobei das Reagierenlassen des mindestens einen natürlichen Öls oder Fetts mit mindestens einer von einer Enophil- oder Enophil-/Dienophilmischung in Abwesenheit von lod durchgeführt wird.

8. Verfahren, Polyol oder Polyurethan gemäß einem der Ansprüche 1-7, wobei die Enophil- oder Enophil-/Dienophilmischung mindestens eines der folgenden beinhaltet: Maleinsäureanhydrid, Fumarsäure, Maleinsäure, Itaconanhydrid, Citraconanhydrid, Acrylsäure oder Halbester von Maleinsäure.

9. Verfahren, Polyol oder Polyurethan gemäß einem der Ansprüche 1-8, wobei die Enophil- oder Enophil-/Dienophilmischung Maleinsäureanhydrid beinhaltet.

10. Verfahren, Polyol oder Polyurethan gemäß einem der Ansprüche 2, 4, 5 und 6, wobei der Ringöffner mindestens eines von Wasser oder Monopropylenglycol beinhaltet.

11. Verfahren, Polyol oder Polyurethan gemäß einem der Ansprüche 1 bis 10, wobei das alkoxylierte modifizierte Polyol aus natürlichem Öl eine Funktionalität zwischen 4 und 6 aufweist.

12. Verfahren, Polyol oder Polyurethan gemäß einem der Ansprüche 1 bis 11, wobei mindestens eines von dem modifizierten natürlichen Öl und dem ringgeöffneten natürlichen Öl eine Newtonsche Flüssigkeit ist.

13. Ein Schaum, der das Polyurethan gemäß einem der Ansprüche 5, 7 und 8 beinhaltet.

14. Ein Elastomer, das das Polyurethan gemäß einem der Ansprüche 5, 7 und 8 beinhaltet.

15. Eine Beschichtung, die das Polyurethan gemäß einem der Ansprüche 5, 7 und 8 beinhaltet.

## Revendications

1. Une méthode pour produire un polyol, comprenant :
fournir au moins une huile ou graisse naturelle comprenant au moins un groupement ène ;
faire réagir cette au moins une huile ou graisse naturelle avec au moins soit un énophile, soit un mélange énophile/diénophile en l'absence d'un catalyseur d'isomérisation de doubles liaisons pour former au moins une huile naturelle modifiée ;
faire réagir cette au moins une huile naturelle modifiée avec au moins un oxyde d'alkylène en présence d'au moins un catalyseur bimétallique au cyanure pour former au moins un polyol à base d'huile naturelle modifiée alcoxylé.

2. La méthode de la revendication 1, comprenant en outre :
après avoir formé l'au moins une huile naturelle modifiée, et avant de faire réagir l'au moins une huile naturelle modifiée avec au moins un oxyde d'alkylène, faire réagir l'au moins une huile naturelle modifiée avec au moins un agent d'ouverture de cycle pour former au moins une huile naturelle modifiée à cycle ouvert.

3. Un polyol à base d'huile naturelle modifiée alcoxylé comprenant un produit de la réaction d'au moins un oxyde d'alkylène et au moins une huile naturelle modifiée, dans lequel :
l'au moins un oxyde d'alkylène et l'au moins une huile naturelle modifiée sont amenés à réagir en présence d'un catalyseur bimétallique au cyanure ;
l'au moins une huile naturelle modifiée comprend un produit de réaction d'au moins une huile ou graisse naturelle et au moins soit un énophile, soit un mélange énophile/diénophile en l'absence d'un catalyseur d'isomérisation de doubles liaisons, et dans lequel l'au moins une huile ou graisse naturelle comprend au moins un groupement ène.

4. Un polyol à base d'huile naturelle modifiée alcoxylé de la revendication 3, dans lequel :
l'au moins une huile naturelle modifiée est une huile naturelle modifiée à cycle ouvert, l'au moins une huile naturelle modifiée à cycle ouvert comprenant un produit de la réaction d'au moins un agent d'ouverture de cycle et du produit de la réaction d'au moins une huile ou graisse naturelle et au moins soit un énophile, soit un mélange énophile/diénophile en l'absence d'un catalyseur d'isomérisation de doubles liaisons, et dans lequel l'au moins une huile ou graisse naturelle comprend au moins un groupement ène.

5. Un polyuréthane, comprenant :
un produit de la réaction de :
au moins un isocyanate ; et
un mélange homogène de polyol comprenant au moins un polyol à base d'huile naturelle modifiée alcoxylé selon la revendication 3 ou la revendication 4.

6. Une méthode pour produire un polyuréthane, comprenant :
procéder à la méthode de la revendication 1 ou de la revendication 2 pour produire une formulation de polyol ; et
faire réagir la formulation de polyol avec au moins un isocyanate pour former un polyuréthane.

7. La méthode, le polyol, ou le polyuréthane d'une quelconque des revendications 1 à 6, dans lesquels la réaction de cette au moins une huile ou graisse naturelle avec au moins soit un énophile, soit un mélange énophile/diénophile est effectuée en l'absence d'iode.

8. La méthode, le polyol, ou le polyuréthane d'une quelconque des revendications 1 à 7, dans lesquels l'énophile ou le mélange énophile/diénophile comprend au moins soit de l'anhydride maléique, soit de l'acide fumarique, soit de l'acide maléique, soit de l'anhydride itaconique, soit de l'anhydride citraconique, soit de l'acide acrylique, soit des demi-esters d'acide maléique.

9. La méthode, le polyol, ou le polyuréthane d'une quelconque des revendications 1 à 8, dans lesquels l'énophile ou le mélange énophile/diénophile comprend de l'anhydride maléique.

10. La méthode, le polyol, ou le polyuréthane d'une quelconque des revendications 2, 4, 5 et 6, dans lesquels l'agent d'ouverture de cycle comprend au moins soit de l'eau, soit du monopropylène glycol.

11. La méthode, le polyol, ou le polyuréthane d'une quelconque des revendications 1 à 10, dans lesquels le polyol à base d'huile naturelle modifiée alcoxylé a une fonctionnalité comprise entre 4 et 6.

12. La méthode, le polyol, ou le polyuréthane d'une quelconque des revendications 1 à 11, dans lesquels au moins soit l'huile naturelle modifiée, soit l'huile naturelle à cycle ouvert est un liquide newtonien.

13. Une mousse comprenant le polyuréthane d'une quelconque des revendications 5, 7 et 8.

14. Un élastomère comprenant le polyuréthane d'une quelconque des revendications 5, 7 et 8.

15. Un revêtement comprenant le polyuréthane d'une quelconque des revendications 5, 7 et 8.
